# EUROPÄISCHE PATENTSCHRIFT

(11) **EP 3 746 215 B1**
(45) Veröffentlichungstag und Bekanntmachung des Hinweises auf die Patenterteilung: **28.10.2026**
(21) Anmeldenummer: 19714601.2
(22) Anmeldetag: 27.03.2019
(51) Int. Cl.: B01J 2/04, F23C 15/00, B01J 8/16, B01J 2/18

(54) **VERFAHREN UND REAKTOR ZUR HERSTELLUNG VON PARTIKELN**
PROCESS AND REACTOR FOR PRODUCING PARTICLES
PROCÉDÉ ET RÉACTEUR POUR LA PRODUCTION DE PARTICULES

(30) Priorität: 05.04.2018 DE 102018205152
(43) Veröffentlichungstag der Anmeldung: 09.12.2020
(73) Patentinhaber: Glatt Ingenieurtechnik GmbH, 99427 Weimar (DE)
(72) Erfinder: JACOB, Michael, 99425 Weimar (DE); OHLENDORF, Frank, 99086 Erfurf (DE); TEIWES, Arne, 99423 Weimar (DE)
(74) Vertreter: Patentanwälte Magenbauer & Kollegen Partnerschaft mbB
(86) Internationale Anmeldenummer: PCT/EP2019/057736
(87) Internationale Veröffentlichungsnummer: WO 2019/192908

(56) Entgegenhaltungen:
- DE-A1- 102015 005 224
- DE-A1- 102015 006 238
- DE-T2- 69 306 128
- DE-T2- 69 306 128
- JP-A- H0 724 292
- JP-A- H0 724 292
- US-B1- 6 464 737
- US-B1- 6 464 737

## Beschreibung

Die Erfindung betrifft ein Verfahren zur Herstellung von Partikeln, vorzugsweise von Nanopartikeln, insbesondere von nanokristallinen Metalloxidpartikeln, umfassend die Schritte (a) des Einbringens mindestens eines Ausgangsstoffes in einen Reaktor, (b) des Unterwerfens des mindestens einen Ausgangsstoffes in einer Behandlungszone des Reaktors unter eine thermische Behandlung einer pulsierenden Prozessgasströmung, (c) des Bildens von Partikeln, (d) des Ausbringens der in Schritt (b) und (c) erhaltenen Partikel aus dem Reaktor, und (e) wobei die Temperierung der Prozessgasströmung von der Erzeugung und Aufrechterhaltung der Druckpulsation der Prozessgasströmung entkoppelt ist, wobei der mindestens eine Ausgangsstoff in der Behandlungszone bei einer Behandlungstemperatur von 100 °C bis 3000 °C und einer Verweilzeit im Bereich von 0,1 s bis 25 s thermisch behandelt wird.

Darüber hinaus betrifft die Erfindung einen Reaktor zur Herstellung von Partikeln, bevorzugt von Nanopartikeln, besonders bevorzugt von nanokristallinen Metalloxidpartikeln, wobei der Reaktor (a) einen Einlass zum Einbringen mindestens eines Ausgangsstoffes in den Reaktor, (b) einen Einlass für ein durch den Reaktor strömendes Prozessgas, (c) eine Heizeinrichtung zur Erwärmung des durch den Reaktor strömenden Prozessgases auf Behandlungstemperatur, (d) eine Pulsationseinrichtung zur Druckmodulation des durch den Reaktor strömenden Prozessgases, (e) eine Abscheidevorrichtung zum Ausbringen der Partikel aus dem Reaktor aufweist und (f) die Heizeinrichtung und die Pulsationseinrichtung räumlich voneinander getrennt sind.

Verfahren und thermische Reaktoren zur Herstellung von Partikeln, insbesondere nanokristallinen Metalloxidpartikeln, sind bereits seit mehr als 50 Jahren bekannt und bilden den Stand der Technik.

Das europäische Patent EP 2 335 821 B1 offenbart ein thermisches Verfahren zur Herstellung nanokristalliner Metalloxidpartikel umfassend die Schritte a) des Einbringens einer Ausgangsverbindung in eine Reaktionskammer mittels eines Trägerfluids, b) des Unterwerfens der Ausgangsverbindung in einer Behandlungszone unter eine thermische Behandlung einer pulsierenden Strömung, c) des Bildens von nanokristallinen Metalloxidpartikeln, d) des Ausbringens der in Schritt b) und c) erhaltenen nanokristallinen Metallpartikel aus dem Reaktor, wobei die Ausgangsverbindung in Form einer Lösung, Aufschlämmung, Suspension oder in festem Aggregatzustand in die Reaktionskammer eingebracht wird und in der Behandlungszone bei einer Temperatur von 240°C bis 600°C mit einer Verweilzeit im Bereich von 200 ms bis 2 s thermisch behandelt wird.

Das Verfahren gemäß europäischen Patent EP 2 335 821 B1 basiert auf einer selbsterregten periodisch-instationären Verbrennung innerhalb einer vordefinierten Reaktorgeometrie, die einem Helmholtz-Resonator entspricht, wobei die Pulsation (Schwingung / Oszillation) der Gasströmung durch Verbrennungsinstabilitäten erzeugt wird. Die Druckpulsation ist somit eine Folge komplexer Strömungsvorgänge in den einzelnen Teilaggregaten des thermischen Reaktors, wodurch eine voneinander unabhängige Einstellung der Parameter der pulsierenden Strömung nicht möglich ist. Darüber hinaus werden bei dem zitierten Verfahren die hergestellten nanokristallinen Metalloxidpartikel aufgrund der direkten Erzeugung des Heißgasstromes als "Rauchgas" unter Anwendung von direkten Brennern bzw. aufgrund einer unvollständigen Verbrennung des Brenngases stets kontaminiert.

Die deutsche Patentanmeldung DE 10 2015 005 224 A1 offenbart ein Verfahren zur zielgenauen Einstellung bzw. Nachregelung der Amplituden der Schwingungen des statischen Druckes und/oder der Heißgasgeschwindigkeit in einer Schwingfeueranlage mit oder ohne thermischer Materialbehandlung/Materialsynthese, die mindestens einen Brenner aufweist, mit dem eine schwingende (pulsierende) Flamme erzeugt wird, und mindestens einen Brennraum (Resonator), in den die Flamme gerichtet ist. Üblicherweise ist eine gezielte, unabhängige Einstellung der Amplitude (Schwingungsstärke) der aus einer selbsterregten, rückgekoppelten Verbrennungsinstabilität resultierenden, pulsierenden Heißgas-Strömung in einer Schwingfeuerung oder einem Pulsationsreaktor und damit auch eine Anpassung des periodisch-instationären Verbrennungsprozesses an den gewählten Durchsatz des Reaktors (bei Materialbehandlung/Materialsynthese: z. B. die Eduktaufgaberate oder die Produktrate) ohne eine gleichzeitige, aber ungewünschte Änderung anderer Prozessparameter (Behandlungstemperatur, Verweilzeit bzw. Behandlungsdauer) und damit der erzeugten Materialeigenschaften nicht möglich. Um dies dennoch zu ermöglichen, wird vorgeschlagen, ein mit Luft, Brennstoff oder Brennstoff-Luft-Gemisch durchströmtes Schwingungsvolumen stromauf des Brenneraustritts in die zum Brenner laufenden Versorgungsleitungen des Brenners einzufügen. Vorzugsweise kann dessen Größe stufenlos einstellbar sein. Damit ist es möglich, die Amplitude der Schwingung zu verändern.

Die deutsche Patentanmeldung DE 10 2015 006 238 A1 zeigt ein Verfahren und eine Vorrichtung zur thermischen Materialbehandlung bzw. Materialumwandlung insbesondere von grobstückigen, körnigen Rohstoffen in einer pulsierenden Heißgasströmung mit unabhängig voneinander einstellbarer Frequenz und Amplitude der Geschwindigkeitsschwingung oder der statischen Druckschwingung der Heißgasströmung in einem vertikal angeordneten Reaktionsraum. Am oberen Ende des vertikal angeordneten Reaktionsraumes eingebrachte Rohstoffpartikel können aufgrund ihrer Form, Masse und Dichte bei eingestellter mittlerer Strömungsgeschwindigkeit der Heißgasströmung nicht von dieser pneumatisch transportiert werden, sondern sinken entgegen der Strömungsrichtung nach unten. Während dieser Sinkzeit von ca. 1 s bis 10 s erfolgt die thermische Behandlung des Materials zu dem gewünschten Produkt, das am unteren Ende des Reaktionsrohres mit Hilfe eines Schleusensystems aus dem Reaktor entnommen wird.

Die deutsche Patentanmeldung DE 10 2016 004 977 A1 betrifft eine Vorrichtung und ein Verfahren zur thermischen Behandlung eines Rohstoffes in einem schwingenden Heißgasstrom eines Schwingfeuerreaktors, mit einem Brenner, der über wenigstens eine Leitung ein Massenstrom zur Bildung wenigstens einer Flamme zugeführt wird, die den schwingenden Heißgasstrom erzeugt, wobei die Flamme in einer Brennkammer angeordnet ist und wobei sich ein Reaktionsraum stromab an die Brennkammer anschließt. Damit man von den Abmessungen der Vorrichtung unabhängig ist, wird vorgeschlagen, den der Flamme zugeführten Massenstrom mit einer extern aufgeprägten Pulsation zu versehen. Die Brennkammer und/oder der Reaktionsraum können dann zur Vermeidung von Resonanzen in der Geometrie veränderbar sein.

Ein Verfahren und eine Vorrichtung zur thermischen Behandlung eines Rohstoffes, mit einer Brennkammer, in der eine periodisch instationäre, schwingende Flamme brennt, zur Erzeugung eines pulsierenden Abgasstromes, der durch eine an die Brennkammer anschließenden Reaktionsraum strömt, wird in der deutschen Patentanmeldung DE 10 2016 002 566 A1 offenbart. Um zu erreichen, dass der Rohstoff effektiv behandelt wird, wird vorgeschlagen, dass in dem Reaktionsraum ein von dem Abgasstrom durchströmter, in der Querschnittsfläche gegenüber dem Reaktionsraum reduzierter Einsatz vorgesehen ist, der eine Länge aufweist, die kürzer ist als eine Gesamtlänge des Reaktionsraumes. Insbesondere sind die Länge des Einsatzes und die Geometrie der Brennkammer veränderbar, so dass die Vorrichtung zwei aufeinander abstimmbare Resonatoren hat.

Der Nachteil der in den vorgenannten deutschen Patentanmeldungen offenbarten Verfahren und Vorrichtungen ist, dass die verfahrenstechnischen Parameter wie Behandlungstemperatur, Gasgeschwindigkeit, Pulsationsfrequenz usw. nicht unabhängig voneinander einstellbar sind. Zudem sind die hergestellten Partikel, insbesondere die hergestellten nanokristallinen Partikel, aufgrund der direkten Erzeugung des Heißgasstromes als "Rauchgas" unter Anwendung von direkten Brennern bzw. aufgrund einer unvollständigen Verbrennung des Brenngases, wie beispielsweise Erdgas, kontaminiert. Verunreinigungen resultieren auch aus der Verwendung von Brenngas selbst. Auch ein reduzierender Betrieb ist nur sehr aufwändig möglich.

Die Übersetzung der europäischen Patentschrift DE 693 06 128 T2 offenbart ein Verfahren und eine Vorrichtung zur

Herstellung von aus einer Flüssigkeit in einer turbulenten Prozessgasströmung erzeugten Granulaten. Der zu versprühenden Flüssigkeit werden vor dem Versprühen durch einen Übertragungskörper (elektro-)akustische Druckimpulse aufgeprägt. Hierdurch wird die Flüssigkeit in kleinere Tröpfchen "zerrissen" und diese werden anschließend in einer genau definierten Behandlungszone zu Trocknungszwecken mit einem turbulent strömenden Prozessgas in Kontakt gebracht.

Die Patentschrift US 6 464 737 B1 zeigt ebenso wie die japanische Patentanmeldung JP H0724292 A einen Fluidisierungsapparat zur Herstellung von Granulaten, wobei die Prozessluft vor dem Eintritt in den Fluidisierungsapparat erwärmt wird und der Prozessluft unabhängig davon bevorzugt eine Pulsation im Bereich bis 10 Hz aufgeprägt wird.

Aufgabe der Erfindung ist es daher sowohl ein Verfahren als auch einen Reaktor zur Herstellung von Partikeln, vorzugsweise von Nanopartikeln, insbesondere von nanokristalliner Metalloxidpartikeln, bereitzustellen, wobei die Wärme- und Stoffübertragungseigenschaften und so die Nachteile aus dem Stand der Technik zumindest teilweise überkommen werden.

Diese Aufgabe wird bei einem Verfahren der eingangs genannten Art dadurch gelöst, dass durch mindestens ein vor und/oder nach dem Prozessraum angeordnetes, als Strömungseinschnürung oder als Drossel ausgebildetes Einbauteil eine Eingrenzung der Druckpulsation auf den Prozessraum erreicht wird. Unter Entkopplung ist hierbei zu verstehen, dass die Energie zum Aufheizen der Prozessgasströmung durch eine Heizeinrichtung und die Energie zur Erzeugung und Aufrechterhaltung der Pulsation der Prozessgasströmung durch eine Pulsationseinrichtung bereitgestellt wird. Mögliche Wechselwirkungen zwischen der Heiz- und der Pulsationseinrichtung sind dabei vernachlässigbar. Es besteht zudem die Möglichkeit eine Einstellung der verfahrenstechnischen Parameter wie Behandlungstemperatur, Gasgeschwindigkeit, Pulsationsfrequenz usw. zumindest größtenteils unabhängig voneinander vorzunehmen. In einer bevorzugten Ausführungsform sind Heiz- und Pulsationseinrichtung räumlich voneinander getrennt. Die Pulsationseinrichtung stellt die druckseitige Amplituden- und Frequenzmodulation für den gasförmigen Energieträger, das Prozessgas, sicher. Die Pulsationseinrichtung prägt dem Prozessgas also eine Druckpulsation auf, bevorzugt mit einer Druckamplitude vom 1 mbar bis 350 mbar, besonders bevorzugt von 1 mbar bis 200 mbar, ganz besonders bevorzugt von 3 mbar bis 50 mbar, am meisten bevorzugt von 3 mbar bis 25 mbar. Die Heizeinrichtung gewährleistet, dass der gasförmige Energieträger, das durch den Reaktor pulsierend strömende, heiße Prozessgas, in Abhängigkeit von den für die Behandlungstemperatur notwendigen Energiemengen temperiert wird. Die jeweilige Einrichtung, hier die Heiz- oder Pulsationseinrichtung, liefert somit den größten Anteil der für ihre jeweilige Funktion, nämlich Erhitzen des Prozessgases bzw. Erzeugen und Aufrechterhalten der Pulsation des Prozessgases, notwendigen Energie. Aufgrund der Entkopplung wird auch die Nutzung von verschiedensten Beheizungskonzepten für das Erhitzen des Prozessgases möglich. Somit wird der für die thermischen Prozesse benötigte gasförmige Energieträger, das Prozessgas, in Abhängigkeit von der benötigten Gasmenge und der benötigten Gasqualität bereitgestellt.

Das mindestens eine Einbauteil wird vor und/oder nach dem Prozessraum in den Reaktor eingebaut. Hierdurch wird durch das mindestens eine Einbauteil die Druckpulsation auf den Prozessraum, insbesondere die Behandlungszone, eingegrenzt. Somit wird im Wesentlichen nur der für die Bildung bzw. Behandlung der Partikel notwendige Reaktorteil der Druckpulsation ausgesetzt, wodurch die Anzahl der Ausrüstungen und Apparate, die aufgrund der Druckpulsation einer erhöhten Beanspruchung ausgesetzt sind, minimiert wird.

Es besteht die Möglichkeit einer chargenweisen oder einer kontinuierlichen Prozessführung.

Bevorzugt werden die im Reaktor thermisch behandelten Partikel mindestens einem Nachbehandlungsschritt unterzogen, besonders bevorzugt bspw. einer Suspendierung, Mahlung oder einer Kalzination. Hierdurch wird eine weitere Verbesserung der Eigenschaften der erzeugten Partikel bewirkt.

Vorteilhafterweise ermöglicht das dargelegte Verfahrenskonzept das Betreiben des erfindungsgemäßen Verfahrens mit jedem beliebigen Gas oder Gasgemisch, als Prozessgas. Bevorzugt sind die als Prozessgas eingesetzten Gase bspw. für den reduzierenden Betrieb oder als Explosionsschutzgas geeignet. In einer besonders bevorzugten Ausführungsform ist das Prozessgas ein inertes Gas, d. h. das Prozessgas nimmt nicht an der im Reaktor stattfindenden Reaktion zur Herstellung der Partikel teil, sondern dient zur Bereitstellung und Übertragung der Wärmeenergie sowie als Transportgas für die Partikel. Sehr vorteilhaft an der vorgenannten Ausgestaltung des erfindungsgemäßen Verfahren ist zudem, dass das Verfahren neben den "klassischen" anorganischen Substanzen oder Stoffsystemen auch für organische und/oder brennbare Substanzen oder Stoffsysteme geeignet ist.

Für die Durchführung des erfindungsgemäßen Verfahrens ist darüber hinaus kein Brenngas erforderlich. Das erfindungsgemäße Verfahren ermöglicht somit eine kontaminationsminimierte Herstellung von Partikeln bis hin zur kontaminationsfreien Herstellung von Partikeln. Durch das Minimieren bzw. Vermeiden von Kontaminationen bei der Herstellung der Partikel, vorzugsweise von Nanopartikeln, besonders bevorzugt von nanokristallinen Metalloxidpartikeln, gemäß dem erfindungsgemäßen Verfahren besteht die Möglichkeit hochreine Partikel bzw. Materialen zu erzeugen bzw. herzustellen. Zudem ist für das erfindungsgemäße Verfahren aufgrund der Möglichkeit, dass kein Brenngas erforderlich ist, ein vereinfachtes Anlagen- und Sicherheitskonzept ausreichend, da beispielsweise keine Flammenüberwachung eingerichtet werden muss. Es besteht die Möglichkeit den Herstellungsprozess so anzupassen, dass das erfindungsgemäße Verfahren eine Tauglichkeit für pharmazeutische Herstellungsprozesse und Herstellungsprozesse in der Nahrungsmittelindustrie aufweist.

Ein weiterer Vorteil des erfindungsgemäßen Verfahrens ist, dass die Pulsation direkt einstellbar ist, weil diese kein Resultat von Verbrennungsinstabilitäten, wie beispielsweise Flammenschwingungen oder dergleichen, oder gepulster Zuführung von Brenngas, Verbrennungsluft, oder Brenngas/Luftgemischen ist. Durch die direkte Einstellbarkeit von für das erfindungsgemäße Verfahren wichtigen Betriebsparametern wie Schwingungsamplitude, Pulsationsfrequenz oder dergleichen ist es möglich das Herstellungsverfahren optimal an das herzustellende Produkt, nämlich die Partikel, vorzugsweise Nanopartikel, insbesondere nanokristallinen Metalloxidpartikel, anzupassen.

Es hat sich zudem herausgestellt, dass im Vergleich zu den Verfahren gemäß dem Stand der Technik deutlich geringere Behandlungstemperaturen (Prozesstemperaturen) in der Behandlungszone des Reaktors möglich sind. Dies beruht darauf, dass die Temperaturen unabhängig von einer Verbrennungsreaktion bspw. durch indirekte Beheizung des Prozessgasstromes einstellbar sind. Die Behandlungstemperaturen liegen beim erfindungsgemäßen Verfahren zwischen 100 °C und 3000 °C bei Verweilzeiten von 0,1 s bis 25 s, bevorzugterweise aber zwischen 650 °C und 2200 °C, besonders bevorzugt zwischen 700 °C und 1800 °C, jeweils bei Verweilzeiten von 0,1 s bis 25 s. Eine Zumischung von z. B. Luft zum Rauchgas zur Anpassung der Behandlungstemperatur ist nicht notwendig.

Bevorzugt wird der mindestens eine Ausgangsstoff in einen Prozessraum des Reaktors aufgegeben. Die Ausgangsstoffe können auch in Form mindestens einer Ausgangsverbindung in den Reaktor aufgegeben werden. Der mindestens eine Ausgangsstoff kann vorteilhafterweise in Form einer Lösung, Suspension, Aufschlämmung, eines Feuchtpulvers, einem Feuchtpulvergemisch oder in festem Ausgangszustand in den Reaktor, bevorzugt in den Prozessraum des Reaktors, eingebracht werden. In einer ganz bevorzugten Ausführungsform des erfindungsgemäßen Verfahrens wird der mindestens eine Ausgangsstoff in oder entgegen der Strömungsrichtung des pulsierend strömenden Prozessgases in den Reaktor, insbesondere in einen Prozessraum des Reaktors, eingebracht. Hierdurch besteht die Möglichkeit auch Stoffe thermisch zu behandeln, die nicht durch das Prozessgas im Reaktor transportiert werden können.

Ein weiterer Vorteil des erfindungsgemäßen Verfahrens ist, dass das pulsierend durch den Reaktor strömende Prozessgas indirekt beheizt wird oder beheizbar ist. Durch die indirekte Beheizung des Prozessgases, bspw. mittels eines konvektiven Heizers, einer als Elektrogaserhitzer, als Plasmaheizung, als Mikrowellenheizung, als Induktionsheizung, als Strahlungsheizer oder als indirekten Brenner ausgebildeten Heizeinrichtung, wird das verwendete, dem Reaktor zugeführte Prozessgas auf die für die Partikelentstehung bzw. Materialbehandlung erforderliche Behandlungstemperatur von 100 °C bis 3000 °C, bevorzugt zwischen 650 °C und 2200 °C, besonders bevorzugt zwischen 700 °C und 1800 °C, gebracht. Auch eine Kombination von unterschiedlichen Beheizungsmethoden ist in jeder Art denkbar. Diese Art der Beheizung hat den Vorteil, dass das Prozessgas keine Verunreinigung durch den Verbrennungsprozess mittels eines direkten Brenners, bspw. durch das durch die Verbrennung entstehende Rauchgas oder durch eine unvollständige Verbrennung in einer Brennkammer, oder das Brenngas selbst erfährt. Vorzugsweise wird das pulsierend durch den Reaktor strömende Prozessgas stromauf der Pulsationseinrichtung, d. h. örtlich vor der Pulsationseinrichtung, auf Behandlungstemperatur erwärmt bzw. erhitzt. Eine solche Anordnung der Heizeinrichtung stromauf der Pulsationseinrichtung ist vorteilhaft, da im Falle einer pulsierenden Strömung des Prozessgases ein nachgeschaltetes Erwärmen bzw. Erhitzen zu einer Beeinflussung der Strömung (Dämpfung bzw. Verstärkung der Pulsation) führen kann.

Es wurde darüber hinaus festgestellt, dass es vorteilhaft ist, wenn der mindestens eine Ausgangsstoff in der Behandlungszone bei einer Behandlungstemperatur von 100 °C bis 3000 °C mit einer Verweilzeit von 2,5 s bis 25 s thermisch behandelt wird. Aufgrund einer längeren Verweilzeit im Reaktor sind die Stoffsysteme länger der Behandlungstemperatur ausgesetzt, wodurch die Materialbehandlung abgeschlossen werden kann, ohne die Substanz oder das Stoffsystem bspw. einer thermischen Nachbehandlung unterziehen zu müssen.

Bevorzugt wird das erfindungsgemäße Verfahren durchgeführt, wobei das Prozessgas mit einer Frequenz von 1 Hz bis 2000 Hz, bevorzugt mit 1 Hz bis 500 Hz, pulsiert. Vorteilhafterweise wird hierdurch erreicht, dass durch die Möglichkeit der Einstellung eines breiten Frequenzbereichs sehr hohe Turbulenzgrade im durch den Reaktor strömenden Prozessgas erreicht werden, wodurch sehr kleine Partikel bis in den nanoskaligen Bereich erzeugbar sind, die exakt auf die zu behandelnden und herzustellenden Partikel anpassbar sind. Durch die Erhöhung des Turbulenzgrades wird die Stoff- und Wärmeübertragung im Reaktor zwischen Prozessgas und thermisch zu behandelnden mindestens einen Ausgangstoff deutlich verbessert.

Des Weiteren wird dem durch den Reaktor strömenden Prozessgas eine Druckpulsation ausgeprägt. Die Aufprägung erfolgt mittels der Pulsationseinrichtung. Die Druckpulsation weist bevorzugt eine Druckamplitude von 1 mbar bis 350 mbar, besonders bevorzugt von 1 mbar bis 200 mbar, ganz besonders bevorzugt von 3 mbar bis 50 mbar, am meisten bevorzugt von 3 mbar bis 25 mbar auf. Durch die aufgeprägte Druckpulsation mit einer definierten Druckamplitude ist es möglich die für die herzustellenden Partikel notwendigen Prozessbedingungen optimal einzustellen.

Ebenfalls bevorzugt läuft das erfindungsgemäße Verfahren bei einem Unterdruck gegenüber Umgebungsdruck ab. Durch einen im Reaktor erzeugten Unterdruck, bspw. durch ein Gebläse am Reaktorauslass, wird sichergestellt, dass während des Herstellungsprozesses keine Partikel bzw. kein Material aus dem Reaktor austritt. Hierdurch wird ein sicherer Anlagenbetrieb erzielt und gewährleistet.

Bevorzugt ist der für das Verfahren verwendete Reaktor ein Reaktor gemäß einem der Ansprüche 8 bis 15.

Die oben genannte Aufgabe wird bei einem Reaktor der eingangs genannten Art dadurch gelöst, dass der Reaktor mindestens ein als Strömungseinschnürung oder als Drossel ausgebildetes Einbauteil vor und/oder nach dem Prozessraum zur Eingrenzung der Druckpulsation auf den Prozessraum aufweist. Bevorzugt ist der Reaktor als Synthesereaktor ausgebildet. Mit dem Begriff der thermischen Synthese ist der Ablauf einer thermischen Pulversynthese bzw. der Partikelbehandlung gemeint. Durch die Trennung und damit durch die Entkopplung besteht die Möglichkeit eine Einstellung der verfahrenstechnischen Parameter wie Behandlungstemperatur, Gasgeschwindigkeit, Pulsationsfrequenz usw. zumindest größtenteils unabhängig voneinander vorzunehmen. Die Heizeinrichtung stellt den Großteil der für das Erhitzen des Prozessgases notwendigen Energie im Reaktor bereit, die Pulsationseinrichtung den größten Teil der für das Erzeugen und Aufrechterhalten der Pulsation des Prozessgases notwendigen Energie. Aufgrund der räumlichen Trennung bzw. Entkopplung der Heiz- und Pulsationseinrichtung wird auch die Nutzung von verschiedensten Beheizungskonzepten für das Erhitzen des Prozessgases im Vergleich zu den Verfahren nach dem Stand der Technik möglich.

Darüber hinaus weist der Reaktor einen Prozessraum auf. Vorzugsweise umfasst der Prozessraum die gesamte Behandlungszone, d. h. den Bereich des Reaktors in dem die Herstellung bzw. thermische Behandlung der Partikel stattfindet. Zudem weist der Reaktor mindestens ein Einbauteil, das insbesondere als Strömungseinschnürung oder als Drossel, insbesondere als drucksteife Drossel, ausgebildet ist, auf. Das mindestens eine Einbauteil wird besonders bevorzugt vor und/oder nach dem Prozessraum in den Reaktor eingebaut. Hierdurch wird durch das mindestens eine Einbauteil die Druckpulsation auf den Prozessraum, insbesondere die Behandlungszone, eingegrenzt. Somit wird im Wesentlichen nur der für die Bildung bzw. Behandlung der Partikel notwendige Reaktorteil der Druckpulsation ausgesetzt, wodurch die Anzahl der Ausrüstungen und Apparate, die aufgrund der Druckpulsation einer erhöhten Beanspruchung ausgesetzt sind, minimiert wird.

Vorteilhafterweise ist die Heizeinrichtung als Vorrichtung zur indirekten Beheizung des durch den Reaktor strömenden Prozessgases ausgebildet. Bevorzugt ist die Heizeinrichtung als konvektiver Gaserhitzer, als Elektrogaserhitzer, als Plasmaheizung, als Mikrowellenheizung, als Induktionsheizung oder als Strahlungsheizer ausgebildet. Ganz besonders bevorzugt ist die Heizeinrichtung stromauf der Pulsationseinrichtung angeordnet. Durch die indirekte Beheizung ist es möglich den Prozessgasstrom auf die für die Partikelentstehung bzw. Materialbehandlung erforderliche Behandlungstemperatur von 100 °C bis 3000 °C, bevorzugt zwischen 650 °C und 2200 °C, besonders bevorzugt zwischen 700 °C und 1800 °C, zu erhitzen. Mittels indirekter Beheizung erfolgt die Erhitzung des Prozessgases ohne eine Verunreinigung durch den Verbrennungsprozess mittels eines direkten Brenners, bspw. durch das durch die Verbrennung entstehende Rauchgas oder durch eine unvollständige Verbrennung, in einer Brennkammer. Vorzugsweise wird das pulsierend durch den Reaktor strömende Prozessgas stromauf der Pulsationseinrichtung, d. h. örtlich vor der Pulsationseinrichtung, auf Behandlungstemperatur erwärmt bzw. erhitzt, was schon deshalb vorteilhaft ist, da im Falle einer pulsierenden Strömung des Prozessgases ein nachgeschaltetes Erwärmen bzw. Erhitzen zu einer Dämpfung bzw. Beeinflussung des Strömungsprofils führen kann. Somit wird eine Tauglichkeit für die Pharma- und Foodindustrie erreicht.

Der Reaktor weist, insbesondere der Prozessraum des Reaktors, einen bevorzugt als Doppelklappe, als Zellenradschleuse, als Taktschleuse oder als Injektor ausgebildeten Feststoffauslass auf. Bevorzugt wird der Feststoffauslass zum Ausbringen der in der Behandlungszone des Reaktors hergestellten bzw. behandelten Partikel verwendet, falls die Partikel aufgrund ihrer Form, Masse und Dichte bei eingestellter mittlerer Strömungsgeschwindigkeit der Prozessgasströmung nicht von dieser transportiert werden können. Besonders bevorzugt sollte bei der Herstellung von Partikeln dieser Art die Behandlungszone des Reaktors, insbesondere also der Prozessraum, vertikal angeordnet sein, so dass die hergestellten bzw. behandelten Partikel nach unten entgegen der Strömungsrichtung in Richtung des Feststoffauslasses sinken, der vorzugsweise im unteren Bereich des Reaktors, insbesondere des Prozessraums, angeordnet ist. Die thermische Behandlung der in den Reaktor eingebrachten Partikel erfolgt somit während des Absinkens der Partikel in Richtung des Feststoffauslasses. Am Feststoffauslass werden die erzeugten Partikel aus dem Reaktor, z. B. über ein Schleusensystem entnommen.

Zudem weist der Reaktor bei Bedarf eine weitere Heizeinrichtung zum Beheizen des Prozessraums des Reaktors auf, die insbesondere als Begleitheizung, als Plasmaheizung, als Mikrowellenheizung, als Induktionsheizung, als Strahlungsheizer oder als Brenner ausgebildet ist. Durch die weitere Heizeinrichtung ist es möglich den Prozessraum des Reaktors direkt oder indirekt zu beheizen, so dass die Behandlungstemperatur für das Erzeugen bzw. die thermische Behandlung der Partikel angepasst und/oder nachjustiert werden kann. Hierdurch wird eine optimale Behandlungstemperatur in der Behandlungszone des Reaktors, insbesondere im Prozessraum des Reaktors, sichergestellt.

Bevorzugt ist die Pulsationseinrichtung als Kompressionsmodul, insbesondere als Kolben, als Drehschieber, als drehbare Klappe oder als modifizierte Dosierschleuse ausgebildet. Hierbei ist der Antrieb der Dosierschleuse kontinuierlich und drehzahlverstellbar. Das Vorhandensein einer Pulsationseinrichtung, die eine Druckpulsation des Prozessgases bewirkt bzw. dem Prozessgas eine Pulsation aufprägt, wobei die Druckpulsation keine Folge von komplexen Strömungsvorgängen in Teilaggregaten, wie beispielsweise der Brennkammer, ist hat den Vorteil, voneinander unabhängige verfahrenstechnische Parameter bzw. Einstellgrößen, wie Amplitude, Frequenz, Gasgeschwindigkeit oder andere, zu haben und beliebige Kombinationen einstellen zu können. Auch die Erzeugung besonderer Schwingungsformen, wie bspw. Sinus, Rechteck, Dreieck oder Sägezahn, ist durch eine derart ausgebildete Pulsationseinrichtung möglich.

Bevorzugt weist der Reaktor als einen Einlass zum Einbringen des mindestens einen Ausgangsstoffes mindestens eine Aufgabevorrichtung auf. Besonders bevorzugt ist die Aufgabevorrichtung als Ein- und/oder Mehrstoffdüse, als Zuführungsrohr und/oder als Pulverinjektor ausgebildet. Durch die Aufgabevorrichtung besteht die Möglichkeit dem Reaktor den mindestens einen Ausgangsstoff stets in seiner optimal aufbereiteten Form bspw. als Lösung, Suspension, Aufschlämmung, Schmelze, Emulsion oder als Feststoff zuzuführen.

Darüber hinaus weist der Reaktor vorzugsweise eine Quenchvorrichtung auf. Durch die Quenchvorrichtung, über die den Reaktor vorzugsweise ein Kühlgas, wie bspw. Luft bzw. Kaltluft zugeführt wird, wird ein schnelles Beenden einer ablaufenden Reaktion bewirkt. Hierbei ist alternativ auch eine Wassereindüsung oder dergleichen denkbar. Andere Gase, wie z. B. Stickstoff (N₂), Argon (Ar), andere Inert- oder Edelgase oder dergleichen sind ebenso als Kühlgas einsetzbar.

Pulver oder andere feinteilige Feststoffe, die im Prozessraum gebildet oder dort behandelt werden, lassen sich durch den Prozessgasstrom aus dem Reaktor austragen und dann mittels einer Abscheidevorrichtung abscheiden. Hierzu können verschiedenste Entstaubungsprinzipe genutzt werden, gegebenenfalls auch mehrstufige Abscheidevorrichtung. Insbesondere ist die Abscheidevorrichtung als Zyklon, als Filter, insbesondere ein Heißgasfilter, bevorzugt als Schlauch- oder Glasfaserfilter, oder als Wäscher ausgebildet. Durch die Abscheidevorrichtung besteht die Möglichkeit die erzeugten bzw. thermisch behandelten Partikel, bevorzugt Nanopartikel, besonders bevorzugt nanokristalline Metalloxidpartikel, aus dem Reaktor auszuschleusen und anschließend gegebenenfalls weiterzuverarbeiten.

Zudem lassen sich mobile Ausführungen des erfindungsgemäßen Reaktors einfach realisieren.

Nachfolgend wird die Erfindung anhand der beiliegenden Zeichnung näher erläutert. In dieser zeigen
- Figur 1: eine schematische Darstellung einer ersten Ausführungsform eines erfindungsgemäßen Reaktors,
- Figur 2: eine schematische Darstellung einer zweiten Ausführungsform eines erfindungsgemäßen Reaktors,
- Figur 3: eine schematische Darstellung einer nicht
- erfindungsgemässen: dritten Ausführungsform eines Reaktors,
- Figur 4: eine schematische Darstellung einer vierten Ausführungsform eines erfindungsgemäßen Reaktors,
- Figur 5: eine detaillierte schematische Darstellung einer fünften Ausführungsform eines erfindungsgemäßen Reaktors und
- Figur 6: eine detaillierte schematische Darstellung einer nicht erfindungsgemässen sechsten Ausführungsform des Reaktors.

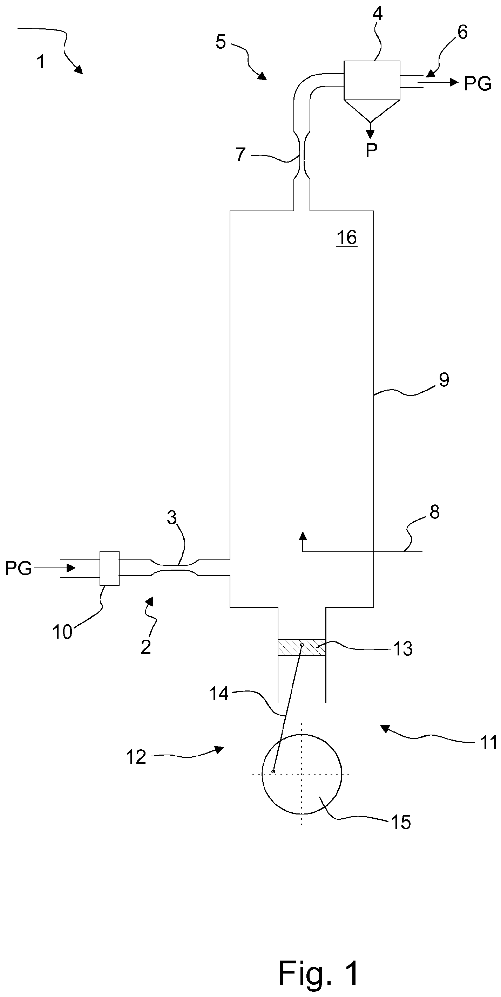

In Fig. 1 wird eine schematische Darstellung einer ersten Ausführungsform des erfindungsgemäßen Reaktors 1 zur Herstellung von organischen oder anorganischen Partikeln (P), bevorzugt von organischen oder anorganischen Nanopartikeln, insbesondere von nanokristallinen Metalloxidpartikeln, gezeigt.

Der Reaktor 1 weist einen Einlass 2 für ein hauptsächlich durch den Reaktor 1 strömendes Prozessgas auf. Weitere Einlässe für die Zumischung weitere gleicher oder unterschiedlicher Prozessgase, bspw. für die Synthese oder Behandlung, sind ebenso denkbar. Als Prozessgas kann ein beliebiges Gas oder beliebiges Gasgemisch verwendet werden. Der Begriff Prozessgas umfasst hierbei sowohl ein beliebiges Gas als auch ein beliebiges Gasgemisch. Das Prozessgas (PG) ist vorzugsweise Luft, ein zur Synthese benötigtes beliebiges Gas, ein inertes Gas, ein Explosionsschutzgas oder ein für den reduzierenden Betrieb geeignetes Gas. Der Einlass 2 ist bevorzugt beispielsweise als Rohr oder -stutzen ausgebildet. Der Einlass 2 weist ein Einbauteil 3 auf. Bevorzugt ist das Einbauteil 3 beispielsweise in Form einer Einschnürung des als Rohr oder -stutzen ausgebildeten Einlasses 2 oder in Form einer Drossel, vorzugsweise eine drucksteife Drossel, ausgebildet.

Darüber hinaus umfasst der Reaktor 1 einen eine Abscheidevorrichtung 4 aufweisenden Auslass 5. Der Auslass 5 ist bevorzugt beispielsweise als Rohr oder -stutzen ausgebildet. Die Abscheidevorrichtung 4 ist bevorzugt als Filter, besonders bevorzugt als Heißgasfilter, beispielsweise als Schlauch- oder als Taschenfilter, als Elektroabscheider oder als Zyklon ausgebildet. Die Abscheidevorrichtung 4 trennt die hergestellten bzw. behandelten Partikel, bevorzugt Nanopartikel, besonders bevorzugt nanokristalline Metalloxidpartikel, aus dem aus dem Reaktor 1 austretenden Prozessgas ab und die thermische behandelten Partikel werden anschließend gegebenenfalls weiteren Behandlungsschritten, wie beispielsweise einer Mahlung oder einer Kalzination, unterzogen. Die Abscheidevorrichtung 4 ist nach dem Herstellungsprozess und den Abscheidebedingungen, z. B. Heißgasabscheidung, Trockenabscheidung oder Nassabscheidung, auswählbar. Das von den Partikeln abgereinigte Prozessgas verlässt den Reaktor über die Auslassöffnung 6.

In der in Fig. 1 gezeigten ersten Ausführungsform des Reaktors 1 ist stromauf der Abscheidevorrichtung 4 im Auslass 5 des Reaktors 1 ein Einbauteil 7 angeordnet. Vorzugsweise ist das Einbauteil 7 in Form einer Einschnürung des als Rohr oder -stutzen ausgebildeten Auslasses 5 oder in Form einer Drossel, vorzugsweise eine drucksteife Drossel, ausgebildet.

Das Prozessgas (PG) strömt über den Einlass 2 in den Reaktor 1 ein und verlässt diesen über den Auslass 5. Die Strömungsrichtung des Prozessgases (PG) ist somit vom Einlass 2 des Reaktors 1 hin zum Auslass 5 des Reaktors 1.

Zudem weist der Reaktor 1 einen Einlass 8 auf. Über den Einlass 8 wird der mindestens eine Ausgangsstoff (AGS) in den Reaktor 1 eingebracht. Der Einlass 8 ist bevorzugt in Form einer Düse, insbesondere einer Sprühdüse, einer Rohröffnung, einer Doppelklappe, einer Zellenradschleuse, einer Taktschleuse oder in Form eines Injektors ausgebildet. Der mindestens eine Ausgangsstoff (AGS) kann beispielsweise in Form einer Lösung, Suspension, Aufschlämmung, als Feuchtpulver oder -gemisch oder als Feststoff, bevorzugt unter Verwendung eines Trägergases, in den Reaktor 1 eingebracht werden. In der Ausführungsform des erfindungsgemäßen Reaktors 1 gemäß Fig. 1 wird der mindestens eine Ausgangsstoff (AGS) in Strömungsrichtung des Prozessgases in den Reaktor 1 eingebracht. Es ist aber denkbar den mindestens einen Ausgangsstoff entgegen der Strömungsrichtung des Prozessgases in den Reaktor 1 einzubringen. Die Entscheidung, ob der mindestens eine Ausgangsstoff (AGS) in oder entgegen der Strömungsrichtung des Prozessgases in den Reaktor 1 eingebracht wird, hängt maßgeblich von Form, Masse und/oder Dichte des mindestens einen Ausgangsstoffes bei einer eingestellten mittleren Strömungsgeschwindigkeit des Prozessgases ab.

Der über den Einlass 8 in den Reaktor 1 eingebrachte mindestens eine Ausgangsstoff (AGS) wird in einer Behandlungszone des Reaktors 1 thermisch behandelt. Die Behandlungszone ist bevorzugt auf einen Prozessraum 9 des Reaktors 1 begrenzt. Zur Begrenzung des Prozessraumes 9 dienen in einer ersten Ausführungsform des Reaktors 1 gemäß Fig. 1 beispielsweise die Einbauteile 3, 7. Aufgrund der Einbauteile 3, 7 wird eine Druckpulsation des durch den Reaktor 1 strömenden Prozessgases auf den Prozessraum 9 begrenzt.

Des Weiteren weist der erfindungsgemäße Reaktor 1 eine Heizeinrichtung 10 auf. Die Heizeinrichtung 10 erwärmt bzw. erhitzt das durch den Reaktor 1 strömende Prozessgas soweit, dass eine gewünschte Behandlungstemperatur erreicht wird. Die Heizeinrichtung 10 ist in der ersten Ausführungsform des erfindungsgemäßen Reaktors 1 stromauf des im Einlass 2 angeordneten Einbauteils 3 angeordnet. Bevorzugt erwärmt bzw. erhitzt die Heizeinrichtung 10 das durch den Reaktor 1 strömende Prozessgas auf eine Behandlungstemperatur von 100 °C bis 3000 °C. Die Übertragung der Wärmeenergie an das durch den Reaktor 1 strömende Prozessgas kann von der Heizeinrichtung 10 direkt oder indirekt erfolgen. Als Heizeinrichtung 10 sind bevorzugt konvektive Heizer, Elektrogaserhitzer, Plasmaheizungen, Mikrowellenheizung, Induktionsheizung oder Strahlungsheizer verwendbar.

Der Reaktor 1 umfasst zudem eine Pulsationseinrichtung 11 zur Druckmodulation des durch den Reaktor 1 strömenden Prozessgases (PG). Durch die Pulsationseinrichtung 11 wird dem durch den Reaktor 1 strömenden Prozessgas eine Pulsation aufgeprägt. Die Druckpulsation weist bevorzugt eine Druckamplitude von 1 mbar bis 350 mbar, besonders bevorzugt von 1 mbar bis 200 mbar, ganz besonders bevorzugt von 3 mbar bis 50 mbar, am meisten bevorzugt von 3 mbar bis 25 mbar auf. Durch den Reaktor 1 strömt aufgrund der Heiz- 10 und Pulsationseinrichtung 11 ein pulsierender Heißgasstrom. Die Schwingungsfrequenz des Prozessgases kann unabhängig von der Druckamplitude eingestellt werden. In Fig. 1 ist die Pulsationseinrichtung 11 als Kompressionsmodul 12 ausgebildet. Das Kompressionsmodul 12 weist einen Kolben 13, ein Pleuelstange 14 und einer Kurbelwelle 15 auf. Die Kurbelwelle 15 wird beispielsweise im Uhrzeigersinn mittels einer nicht dargestellten drehzahlverstellbaren Antriebeinheit gedreht, wodurch die zwischen Kolben 13 und Kurbelwelle 15 angeordnete Pleuelstange 14 den Kolben 13 zwischen einem unteren und einem oberen Totpunkt bewegt, so dass sich ein Volumen 16 des Reaktors 1 vergrößert oder verkleinert. Hierdurch wird eine pulsierende Strömung des Prozessgases erzeugt. Die Schwingungsfrequenz des durch den Reaktor 1 aufgrund der Pulsationseinrichtung 11 pulsierend strömenden Prozessgases ist ebenfalls einstellbar, bevorzugt im Frequenzbereich von 1 Hz bis 2000 Hz, besonders bevorzugt im Frequenzbereich von 1 Hz bis 500 Hz.

Über die Strömung wird die benötigte Energie zugeführt und im Zusammenwirken mit dem Volumen 16 des Reaktors 1 (Reaktorvolumen, -länge, -größe), insbesondere des Prozessraums 9 des Reaktors 1, die Behandlungs-/Verweilzeit definiert. Die Verweilzeit des mindestens einen in den Reaktor 1, insbesondere in den Prozessraum des Reaktors 1, eingebrachten Ausgangsstoffes beträgt in der Behandlungszone des Reaktors 1 zwischen 0,1 s und 25 s.

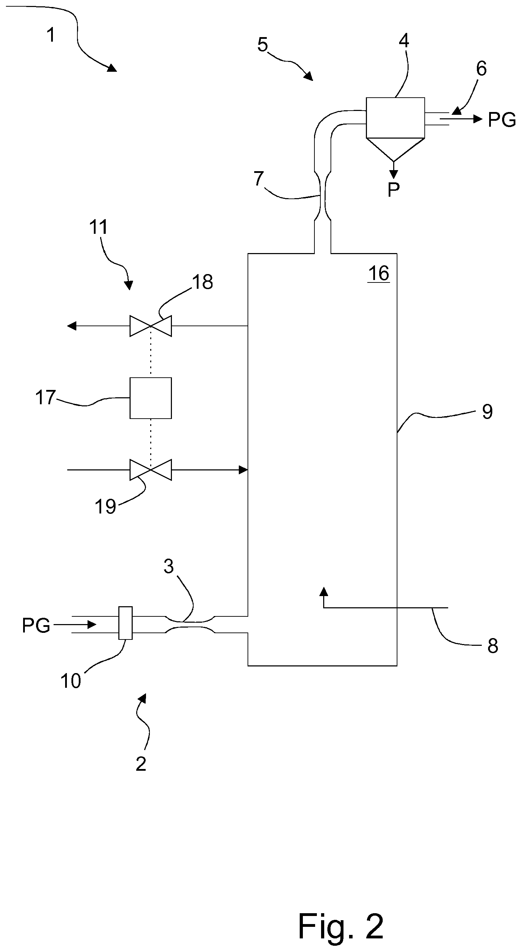

Fig. 2 zeigt eine schematische Darstellung einer zweiten Ausführungsform eines erfindungsgemäßen Reaktors 1 zur Herstellung von Partikeln (P), vorzugsweise Nanopartikeln, besonders bevorzugt von nanokristallinen Metalloxidpartikeln. Der Reaktor 1 weist einen Einlass 2 für ein durch den Reaktor 1 strömendes Prozessgas auf. Das Prozessgas (PG) ist ein Gas oder Gasgemisch, vorzugsweise Luft, ein zur Synthese benötigtes beliebiges Gas, ein inertes Gas, ein Explosionsschutzgas oder ein für den reduzierenden Betrieb geeignetes Gas. Der Einlass 2 ist bevorzugt beispielsweise als Rohr oder -stutzen ausgebildet und weist ein Einbauteil 3 auf. Bevorzugt ist das Einbauteil 3 beispielsweise in Form einer Einschnürung des als Rohr oder -stutzen ausgebildeten Einlasses 2 oder in Form einer Drossel, vorzugsweise eine drucksteife Drossel, ausgebildet.

Stromauf des im Einlass 2 angeordneten Einbauteils 3 ist die Heizeinrichtung 10 zum Erwärmen bzw. Erhitzen des durch den Reaktor 1 strömenden Prozessgases angeordnet. Bevorzugt erwärmt bzw. erhitzt die Heizeinrichtung 10 das durch den Reaktor 1 strömende Prozessgas auf eine Behandlungstemperatur von 100 °C bis 3000 °C. Die Übertragung der Wärmeenergie an das durch den Reaktor 1 strömende Prozessgas kann von der Heizeinrichtung 10 direkt oder indirekt erfolgen. Bevorzugt erfolgt die Übertragung der Wärmeenergie im erfindungsgemäßen Verfahren auf dem indirekten Weg. Die Heizeinrichtung 10 kann auch beispielsweise als ein direkter Brenner ausgeführt werden, d. h. zwischen dem Prozessgas und einer Brennerflamme besteht ein direkter Kontakt. Des Weiteren kann die Heizeinrichtung 10 als indirekte Heizeinrichtung bspw. in Form eines Elektrogaserhitzers, einer Plasmaheizung, einer Mikrowellenheizung, eine Induktionsheizung, eines Strahlungsheizers, eines beliebigen konvektiven Heizers oder eines indirekten Brenners ausgebildet sein.

Der Reaktor 1 weist überdies einen Prozessraum 9 auf, der sich stromab an den Einlass 2 anschließt.

Darüber hinaus weist der Reaktor 1 einen Auslass 5 auf. Der Auslass 5 umfasst in der zweiten Ausführungsform des erfindungsgemäßen Reaktors 1 ein Einbauteil 7 sowie eine Abscheidevorrichtung 4. In der zweiten Ausführungsform des Reaktors 1 ist das Einbauteil 7 stromauf der Abscheidevorrichtung 4 im Auslass 5 angeordnet. Das Einbauteil 7 ist als Einschnürung des Rohrs oder -stutzens ausgebildet. Das Einbauteil 7 kann jedoch auch als Drossel, vorzugsweise als drucksteife Drossel, ausgebildet sein. Die Abscheidevorrichtung 4 trennt die im Reaktor 1 hergestellten bzw. behandelten Partikel aus dem Prozessgas-Strom ab, so dass die hergestellten bzw. behandelten Partikel aus der Abscheidevorrichtung 4 entnommen werden können und das nicht oder nur teilweise mit Partikeln beladene Prozessgas über die Auslassöffnung 6 des Auslasses 5 in die Atmosphäre ausströmt. Das nicht beladene Prozessgas kann bei Bedarf zum Einlass 2 zurückgeführt werden.

Das im Einlass 2 angeordnete Einbauteil 3 und das im Auslass 5 angeordnete Einbauteil 7 begrenzen eine Druckpulsation des durch den Reaktor 1 strömenden Prozessgases auf den Prozessraum 9 des Reaktors 1.

Der mindestens eine Ausgangsstoff (AGS) wird dem Reaktor 1, insbesondere dem Prozessraum 9 des Reaktors 1, über einen Einlass 8 zugeführt, so dass der mindestens eine Ausgangsstoff in einer Behandlungszone des Reaktors 1 thermisch behandelt werden kann. Die Behandlungszone ist bevorzugt auf einen Prozessraum 9 des Reaktors 1 begrenzt. Bevorzugt ist der Einlass 7 zum Einbringen des mindestens einen Ausgangsstoffes (AGS) mindestens eine Aufgabevorrichtung, die besonders bevorzugt in Form einer Ein- und/oder Mehrstoffdüse und/oder in Form mindestens eines Pulverinjektors ausgebildet ist. Durch die Aufgabevorrichtung besteht die Möglichkeit dem Reaktor den mindestens einen Ausgangsstoff stets in seiner optimalen aufbereiteten Form bspw. als Lösung, Suspension, Aufschlämmung oder als Feststoff zuzuführen. In der zweiten Ausführungsform des Reaktors 1 wird der mindestens eine Ausgangsstoff (AGS) in Strömungsrichtung des Prozessgases aufgegeben.

Zudem weist der Reaktor 1 eine Pulsationseinrichtung 11 zur Druckmodulation des durch den Reaktor 1 strömenden Prozessgases. Durch die Pulsationseinrichtung 11 wird dem durch den Reaktor 1 strömenden Prozessgas eine Pulsation aufgeprägt.

Die Druckpulsation weist bevorzugt eine Druckamplitude von 1 mbar bis 350 mbar, besonders bevorzugt von 1 mbar bis 200 mbar, ganz besonders bevorzugt von 3 mbar bis 50 mbar, am meisten bevorzugt von 3 mbar bis 25 mbar auf. Durch den Reaktor 1 strömt aufgrund der Heiz- 10 und Pulsationseinrichtung 11 ein pulsierender Heißgasstrom. Die Schwingungsfrequenz des Prozessgases kann unabhängig von der Druckamplitude eingestellt werden. In Fig. 2 wird die Pulsationseinrichtung 11 realisiert, indem mittels einer Kontrolleinheit 17 zwei Ventile 18, 19 gesteuert werden, die das im Reaktor 1, insbesondere im Prozessraum des Reaktors 1, enthaltene Volumen 16 über eine Prozessgaszu- bzw. Prozessgasabfuhr entspannen oder komprimieren. Eine Entspannung, also die Prozessgasabfuhr aus dem Reaktor 1, ist auch über den Auslass 5 möglich, sodass die Druckpulsation ausschließlich über ein geregeltes oder gesteuertes Ventil 19 erfolgt. Vorteilhafterweise wird hierdurch ein Produktverlust über die Prozessgasabfuhr über das Ventil 18 verhindert. Beim Kompressionsvorgang wird das Ventil 19 durch die Kontrolleinheit 17 geöffnet und das Ventil 18 geschlossen, so dass Prozessgas in den Reaktor 1 ein strömenden kann. Hierdurch erhöht sich der Druck im Reaktor 1. Beim Entspannungsvorgang wird das Ventil 18 durch die Kontrolleinheit 17 geöffnet und gleichzeitig das Ventil 19 geschlossen, wodurch der Druck im Reaktor 1 sinkt. Hierdurch wird dem durch den Reaktor 1 strömenden Prozessgas eine Druckpulsation aufgeprägt. Die Schwingungsfrequenz des durch den Reaktor 1 aufgrund der Pulsationseinrichtung 11 pulsierend strömenden Prozessgases ist ebenfalls einstellbar, bevorzugt im Frequenzbereich von 1 Hz bis 2000 Hz, besonders bevorzugt im Frequenzbereich von 1 Hz bis 500 Hz. Die Einstellung der Schwingungsfrequenz erfolgt über die die Ventile 18, 19 regelnde bzw. steuernde Kontrolleinheit 17.

Über die Strömung wird die benötigte Energie zugeführt und im Zusammenwirken mit dem Volumen 16 des Reaktors 1 (Reaktorvolumen, -länge, -größe), insbesondere des Prozessraums 9 des Reaktors 1, die Behandlungs-/Verweilzeit definiert. Die Verweilzeit des mindestens einen in den Reaktor 1, insbesondere in den Prozessraum des Reaktors 1, eingebrachten Ausgangsstoffes beträgt in der Behandlungszone des Reaktors 1 zwischen 0,1 s und 25 s.

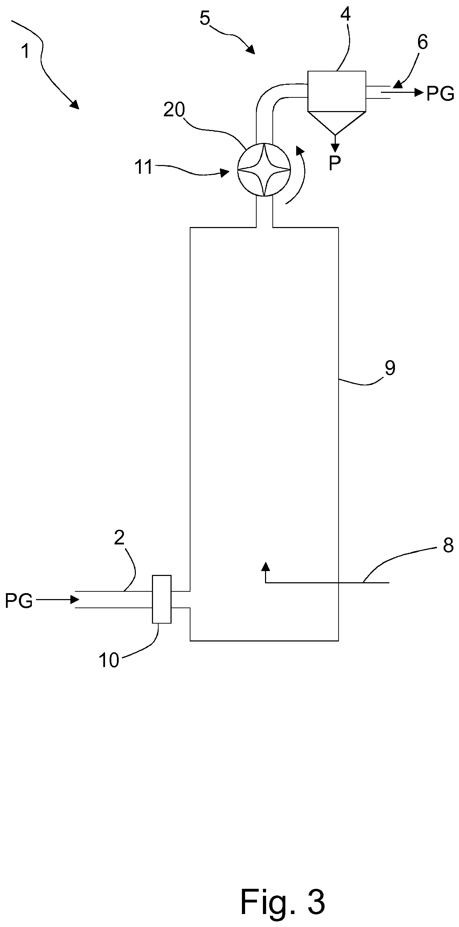

Eine schematische Darstellung einer nicht erfindungsgemässen dritten Ausführungsform eines Reaktors 1 zur Herstellung von Partikeln, insbesondere Nanopartikeln, ist in Fig. 3 dargestellt. Der Reaktor 1 weist einen Einlass 2 sowie einen Auslass 5 auf, beide bevorzugt als Rohr oder -stutzten ausbildet. Das durch den Reaktor 1 strömende Prozessgas tritt über den Einlass 2 in den Reaktor 1 ein und tritt über den Auslass 5 aus dem Reaktor 1 aus.

Der Einlass 2 weist eine Heizeinrichtung 10 auf, insbesondere eine das durch den Reaktor 1 strömende Prozessgas indirekt erwärmende bzw. erhitzende Heizeinrichtung 10, bevorzugt einen Elektrogaserhitzer, eine Plasmaheizung, eine Mikrowellenheizung, eine Induktionsheizung, einen Strahlungsheizer oder dergleichen. Je nach Reinheitsanforderungen an das Prozessgas sind Heizflächen der Heizeinrichtung 10 gasberührend oder kontaktfrei ausgebildet. Bevorzugt erwärmt bzw. erhitzt die Heizeinrichtung 10 das durch den Reaktor 1 strömende Prozessgas auf eine Behandlungstemperatur von 100 °C bis 3000 °C, wobei die Verweilzeit des mindestens einen in den Reaktor 1, insbesondere in den Prozessraum des Reaktors 1, eingebrachten Ausgangsstoffes in der Behandlungszone des Reaktors 1 zwischen 0,1 s und 25 s beträgt.

Der über den Einlass 8 in den Reaktor 1 eingebrachte mindestens eine Ausgangsstoff (AGS) wird in einer Behandlungszone des Reaktors 1 thermisch behandelt. Die Behandlungszone ist bevorzugt auf einen Prozessraum 9 des Reaktors 1 begrenzt.

Der Auslass 5 weist eine Abscheidevorrichtung 4 auf, insbesondere einen Filter, bevorzugt einen Heißgasfilter, ganz besonders bevorzugt einen Schlauch- oder Glasfaserfilter, einen Zyklon oder Wäscher. Die Abscheidevorrichtung 4 trennt die thermisch behandelten Partikel aus dem Prozessgasstrom ab. Die aus dem Prozessgasstrom abgeschiedenen Partikel werden aus der Abscheidevorrichtung 4 abgeführt. Das nicht beladene Prozessgas wird über die Auslassöffnung 6 des Auslasses 5 in die Umgebung abgeführt.

Der Reaktor 1 weist eine Pulsationseinrichtung 11 zur Amplituden- und/oder Druckmodulation des durch den Reaktor 1 strömenden Prozessgases (PG) auf. Durch die Pulsationseinrichtung 11 wird dem durch den Reaktor 1 strömenden Prozessgas eine Pulsation aufgeprägt. Die Druckpulsation weist bevorzugt eine Druckamplitude von 1 mbar bis 350 mbar, besonders bevorzugt von 1 mbar bis 200 mbar, ganz besonders bevorzugt von 3 mbar bis 50 mbar, am meisten bevorzugt von 3 mbar bis 25 mbar auf. Durch den Reaktor 1 strömt aufgrund der Heiz- 10 und Pulsationseinrichtung 11 ein pulsierender heißer Prozessgasstrom. Die Amplitudenmodulation kann unabhängig von der Frequenzmodulation erfolgen. In Fig. 3 wird die Pulsationseinrichtung 11 durch einen Drehschieber 20 realisiert. Zusätzlich weist das in den Reaktor 1 einströmende Prozessgas in der Ausführungsform des erfindungsgemäßen Reaktors 1 einen erhöhten Vordruck auf. Durch den Drehschieber 20 wird der einlassseitig in den Reaktor 1 eintretende unter einem Vordruck stehende Prozessgasstrom unterbrochen oder freigegeben, so dass das Prozessgas getaktet in den Reaktor 1 eintritt. Hierdurch wird eine Pulsation des durch den Reaktor 1 strömenden Prozessgases bewirkt. Auf den Prozessgasstrom wird eine Pulsationsschwingung aufgeprägt. Die Schwingungsfrequenz des durch den Reaktor 1 aufgrund der Pulsationseinrichtung 11 pulsierend strömenden Prozessgases ist ebenfalls einstellbar, bevorzugt im Frequenzbereich von 1 Hz bis 2000 Hz, besonders bevorzugt im Frequenzbereich von 1 Hz bis 500 Hz.

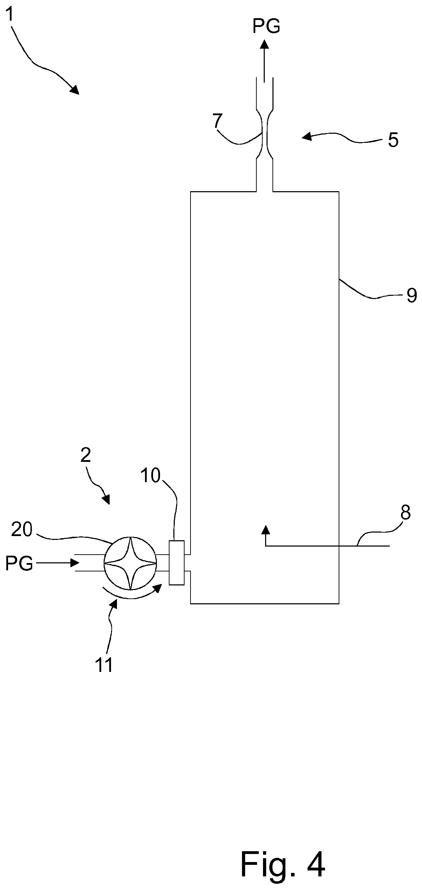

Fig. 4 zeigt eine schematische Darstellung einer vierten Ausführungsform des erfindungsgemäßen Reaktors 1 zur Herstellung von Partikeln, bevorzugt organischen oder anorganischen Nanopartikeln, ganz besonders bevorzugt von nanokristallinen Metalloxidpartikeln.

Der Reaktor 1 weist einen Einlass 2, bevorzugt als Rohr oder -stutzen ausgebildet, und einen Auslass 5, ebenfalls bevorzugt als Rohr oder -stutzen ausgebildet, auf. Durch eine Einlassöffnung des Einlasses 2 tritt das Prozessgas, vorzugsweise ein inertes Gas, ein Explosionsschutzgas oder ein für den reduzieren den Betrieb geeignetes Gas, in den Reaktor 1 ein. In der in Fig. 4 dargestellten vierten Ausführungsform des erfindungsgemäßen Reaktors umfasst der Einlass 2 eine Heizeinrichtung 10 und eine Pulsationseinrichtung 11. Die Heizeinrichtung 10 ist hierbei stromab der Pulsationseinrichtung 11 angeordnet.

Die Heizeinrichtung 10 erwärmt bzw. erhitzt das über die Einlassöffnung des Einlasses 2 in den Reaktor 1 und danach durch den Reaktor 1 strömenden Prozessgases auf Behandlungstemperatur. Bevorzugt erwärmt bzw. erhitzt die Heizeinrichtung 10 das durch den Reaktor 1 strömende Prozessgas auf eine Behandlungstemperatur von 100 °C bis 3000 °C, besonders bevorzugt auf eine Temperatur zwischen 650 °C und 2200 °C, ganz besonders bevorzugt auf eine Temperatur zwischen 700 °C und 1800 °C. Die Heizeinrichtung 10 kann die zum Erwärmen bzw. Erhitzen notwendige Wärmeenergie an das durch den Reaktor 1 strömende Prozessgas mittels direkter oder indirekter Beheizung bereitstellen. Die Heizeinrichtung 10 ist hierbei beispielsweise ein direkter Brenner, d. h. zwischen dem Prozessgas und einer Brennerflamme besteht ein direkter Kontakt. Des Weiteren kann die Heizeinrichtung 10 als indirekte Heizeinrichtung in Form eines Elektrogaserhitzers, einer Plasmaheizung, einer Mikrowellenheizung, eine Induktionsheizung, eines Strahlungsheizers oder eines indirekten Brenners ausgebildet sein. Je nach Reinheitsanforderungen des durch den Reaktor 1 strömenden Prozessgases können die Heizflächen gasberührend oder kontaktfrei ausgebildet sein. Bevorzugt wird eine indirekte Beheizung eingesetzt, da so der Reaktor eine Pharma- und Foodindustrietauglichkeit aufweist.

Darüber hinaus weist der Reaktor 1 eine Pulsationseinrichtung 11 zur Druckmodulation des durch den Reaktor 1 strömenden Prozessgases auf, wodurch dem durch den Reaktor 1 strömenden Prozessgas eine Pulsation aufgeprägt wird. Die Druckpulsation weist bevorzugt eine Druckamplitude von 1 mbar bis 350 mbar, besonders bevorzugt von 1 mbar bis 200 mbar, ganz besonders bevorzugt von 3 mbar bis 50 mbar, am meisten bevorzugt von 3 mbar bis 25 mbar auf. Durch den Reaktor 1 strömt aufgrund der Heiz- 10 und Pulsationseinrichtung 11 ein pulsierender heißer Prozessgasstrom. Die Schwingungsfrequenz des Prozessgases kann unabhängig von der Druckamplitude eingestellt werden. Die Schwingungsfrequenz des durch den Reaktor 1 aufgrund der Pulsationseinrichtung 11 pulsierend strömenden Prozessgases ist ebenfalls einstellbar, bevorzugt im Frequenzbereich von 1 Hz bis 2000 Hz, besonders bevorzugt im Frequenzbereich von 1 Hz bis 500 Hz. In Fig. 4 wird die Pulsationseinrichtung 11 durch einen Drehschieber 20 wie in Fig. 3 bereits beschrieben realisiert. Auch in der Ausführungsform des erfindungsgemäßen Reaktors gemäß Fig. 4 weist das in den Reaktor 1 einströmende Prozessgas einen erhöhten Vordruck auf. Durch den Drehschieber 20 wird der einlassseitig in den Reaktor 1 eintretende unter einem Vordruck stehende Prozessgasstrom unterbrochen oder freigegeben, so dass Prozessgas getaktet in den Reaktor 1 eintritt. Hierdurch wird eine Pulsation des durch den Reaktor 1 strömenden Prozessgases bewirkt. Auf den Prozessgasstrom wird eine Pulsationsschwingung aufgeprägt.

Der Reaktor 1 weist überdies einen Prozessraum 9 auf, der sich stromab an den Einlass 2 anschließt. Im Prozessraum 9 des Reaktors 1 wird der mindestens eine Ausgangsstoff (AGS) in den pulsierend strömenden, heißen Prozessgasstrom eingebracht. Zum Einbringen des mindestens einen Ausgangsstoffes (AGS) in den Reaktor 1 dient ein Einlass 8, der bevorzugt als Aufgabevorrichtung, besonders bevorzugt als Ein- und/oder Mehrstoffdüse und/oder Pulverinjektor ausgebildet ist. Der mindestens eine Ausgangsstoff (AGS) kann in oder entgegen der Strömungsrichtung des pulsierenden, heißen Prozessgases in den Reaktor 1 eingebracht werden. In der gezeigten Ausführungsform des Reaktors 1 wird der mindestens eine Ausgangsstoff (AGS) in Strömungsrichtung des Prozessgases eingebracht.

Des Weiteren weist der Reaktor 1 einen Auslass 5 auf. Der Auslass 5 ist vorzugsweise als Rohr oder -stutzen ausgebildet. In der in Fig. 4 dargestellten Ausführungsform des erfindungsgemäßen Reaktors 1 umfasst der Auslass 5 ein Einbauteils 7. Das Einbauteils 7 ist in Form einer Einschnürung des Auslasses 5 ausgebildet. Das Einbauteil 7 begrenzt die Druckpulsation auf den Prozessraum 9 des Reaktors 1. Stromab des Einbauteils 7 kann eine hier nicht dargestellte Abscheidevorrichtung 4 im Auslass 5 angeordnet sein.

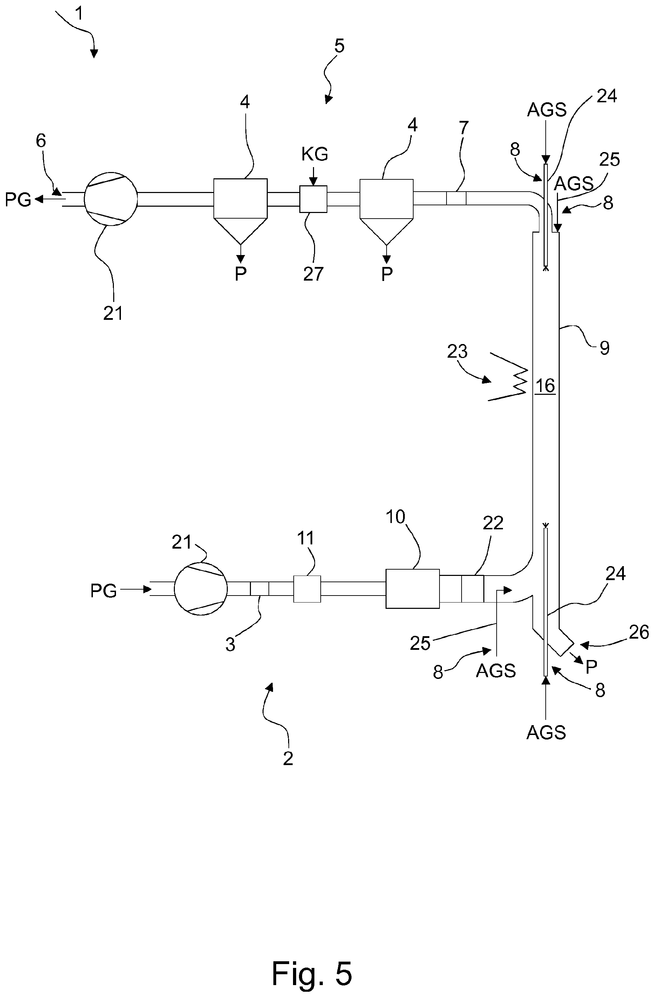

Fig. 5 stellt eine detaillierte schematische Darstellung einer fünften Ausführungsform eines erfindungsgemäßen Reaktors 1 dar, der zur Herstellung von Partikeln, bevorzugt zur Herstellung von anorganischen oder organischen Nanopartikeln, besonders bevorzugt von nanokristallinen Metalloxidpartikeln geeignet ist.

Der Reaktor 1 weist einen eine Einlassöffnung aufweisenden Einlass 2 auf. Über die Einlassöffnung des Einlasses 2 tritt das Prozessgas (PG) in den Reaktor 1 ein. Als Prozessgas können beispielsweise Umgebungsluft, Stickstoff oder andere Spezialgase verwendet werden. Das Prozessgas kann dem Reaktor 1 ungefiltert, gefiltert und/oder konditioniert über den Einlass 2 zugeführt werden.

Zudem weist der Einlass 2 eine Strömungsmaschine 21 auf, die beispielsweise als Radialventilator, Gebläse oder Verdichter ausgebildet sein kann.

Zusätzlich umfasst der Einlass 2 eine Pulsationseinrichtung 11, vorzugsweise ein Drehschieber oder eine drehende Klappe, die zur Druckmodulation des durch den Reaktor 1 strömenden Prozessgases (PG) verwendet wird. Hierdurch wird dem durch den Reaktor 1 strömenden Prozessgas eine Pulsation aufgeprägt, so dass durch den Reaktor 1 aufgrund der Pulsationseinrichtung 11 ein pulsierender Prozessgasstrom strömt. Die Druckpulsation weist bevorzugt eine Druckamplitude von 1 mbar bis 350 mbar, besonders bevorzugt von 1 mbar bis 200 mbar, ganz besonders bevorzugt von 3 mbar bis 50 mbar, am meisten bevorzugt von 3 mbar bis 25 mbar auf. Die Schwingungsfrequenz des Prozessgases kann unabhängig von der Druckamplitude eingestellt werden. Die Schwingungsfrequenz des durch den Reaktor 1 aufgrund der Pulsationseinrichtung 11 pulsierend strömenden Prozessgases ist ebenfalls einstellbar, bevorzugt im Frequenzbereich von 1 Hz bis 2000 Hz, besonders bevorzugt im Frequenzbereich von 1 Hz bis 500 Hz. Die Druckpulsation ist "zwangserregt", d. h. die Druckpulsation ist keine Folge von komplexen Strömungsvorgängen in Teilaggregaten, zum Beispiel in Brennkammer. Das hat den Vorteil, voneinander unabhängige verfahrenstechnische Parameter bzw. Einstellgrößen zu haben und beliebige Kombinationen einstellen zu können. Eine in ihren Parametern (Amplitude, Frequenz, Geschwindigkeit usw.) einstellbare Prozessgasströmung ist nur so lange bzw. nur dort notwendig, wo die Partikel im Wesentlichen gebildet oder behandelt werden. Es ist nicht zwingend erforderlich und auch nicht immer sinnvoll, das gesamte Anlagenvolumen 16 pulsierend zu durchströmen.

Des Weiteren weist der Einlass 2 des Reaktors 1 eine Heizeinrichtung 10 auf, die das durch den Reaktor strömende Prozessgas auf Behandlungstemperatur erwärmt bzw. erhitzt. Die Behandlungstemperatur liegt hierbei zwischen 100 °C und 3000 °C. Als Heizeinrichtung 10 sind besonders Elektrogaserhitzer, Plasmaheizungen, Mikrowellenheizung, Induktionsheizung, Strahlungsheizer geeignet. Über die Heizeinrichtung 10 besteht die Möglichkeit das Prozessgas direkt oder indirekt zu erwärmen bzw. erhitzen. Zur direkten Erwärmung des Prozessgases kann beispielsweise auch ein in einer Brennkammer angeordneter Brenner verwendet werden. Je nach Reinheitsanforderungen des für den Prozess notwendigen Prozessgases können die Heizflächen der Heizeinrichtung 10 gasberührend oder kontaktfrei ausgebildet sein. Bevorzugt wird das Prozessgas indirekt beheizt. Die Verweilzeit des mindestens einen in den Reaktor 1, insbesondere in den Prozessraum 9 des Reaktors 1, eingebrachten Ausgangsstoffes beträgt in der Behandlungszone des Reaktors 1 zwischen 0,1 s und 25 s.

In der fünften Ausführungsform des erfindungsgemäßen Reaktors 1 ist im Einlass 2 zwischen der Strömungsmaschine 21 und der Pulsationseinrichtung 11 ein Einbauteil 3 verbaut. Das Einbauteil 3 ist vorzugsweise in Form einer Einschnürung des beispielsweise als Rohr oder -stutzen ausgebildeten Einlasses 2 oder in Form einer Drossel, bevorzugt einer drucksteifen Drossel, ausgebildet.

Zusätzlich ist im Reaktor 1 im Anschluss an die Heizeinrichtung 10 ein Wärmespeicher 22 verbaut. Bevorzugt ist der Wärmespeicher 22 als poröses Medium, beispielsweise als Schwamm oder Schüttung oder dergleichen ausgebildet. Als Wärmespeicher werden besonders bevorzugt Einbauteile mit hoher Wärmekapazität eingesetzt. Der Wärmespeicher 22 hat die Funktion eine Dämpfung bzw. einen Ausgleich von Temperaturschwankungen aufgrund pulsierender Strömungen in der Heizeinrichtung 10 zu bewirken. Bei einer Anordnung des Wärmespeichers 22 stromab der Pulsationseinrichtung 11 tritt ein minimaler Druckverlust auf.

Der Reaktor 1 weist insbesondere einen Prozessraum 9 auf. Der Prozessraum 9 dient hauptsächlich als Behandlungszone der herzustellenden bzw. zu behandelnden Partikeln. Der Reaktor 1, bevorzugt der Prozessraum 9, umfasst eine weitere Heizeinrichtung 23. Über die weitere Heizeinrichtung 23 ist es möglich den Prozessraum 9, vorzugsweise die Prozessraum- oder Reaktorwand, direkt oder indirekt zu beheizen. Bevorzugt ist die weitere Heizeinrichtung 23 als Begleitheizung, Plasmaheizung, Mikrowellenheizung, Induktionsheizung, Strahlungsheizer oder als Brenner ausgebildet. Vorteilhafterweise kann durch die weitere Heizeinrichtung 23 das durch den Reaktor 1 strömende Prozessgas die Behandlungstemperatur für das Erzeugen bzw. die thermische Behandlung der Partikel angepasst und/oder nachjustiert werden. Hierdurch wird sichergestellt, dass im Reaktor 1 zu jeder Zeit des Herstellungsverfahrens eine optimale Behandlungstemperatur in der Behandlungszone des Reaktors 1, insbesondere im Prozessraum 9 des Reaktors 1, eingestellt ist.

Zudem weist der Reaktor 1 zumindest einen Einlass 8 zum Einbringen mindestens eines Ausgangsstoffes in den Reaktor 1, bevorzugt in den Prozessraum 9 des Reaktors 1, auf. In der in Fig. 5 dargestellten Ausführungsform des erfindungsgemäßen Reaktors 1 sind exemplarisch unterschiedliche Einlässe 8 beispielsweise zur Einbringung von Flüssigkeiten oder Feststoffen in den Reaktor 1, bevorzugt in den Prozessraum 9 des Reaktors 1, gezeigt. Flüssigkeiten oder flüssige Rohrstoffe (Precursoren) können in den Reaktor 1, bevorzugt in den Prozessraum 9 des Reaktors 1, vorzugsweise als Lösung, Suspension, Schmelze, Emulsion oder als reine Flüssigkeit eingebracht werden. Das Einbringen der flüssigen Rohstoffe oder Flüssigkeiten erfolgt bevorzugt kontinuierlich. Für das Einbringen von Flüssigkeiten in den Reaktor 1 wird vorzugsweise eine Aufgabevorrichtung 24 wie beispielsweise Sprühdüsen, Zuführungsrohre oder Vertropfer verwendet, die beispielsweise als Ein- oder Mehrstoffdüsen, Druckdüsen, Vernebler (Aerosol) oder Ultraschalldüse ausgebildet sind. Im Gegensatz hierzu wird für das Einbringen von Feststoffen, beispielsweise Pulver, Granulate oder dergleichen, in den Reaktor 1, bevorzugt den Prozessraum 9 des Reaktors 1, vorzugsweise eine Aufgabevorrichtung 25 wie beispielsweise eine Doppelklappe, eine Zellenradschleuse, eine Taktschleuse oder einen Injektor, verwendet. Das Einbringen des mindestens einen Ausgangsstoffes (AGS) in Form einer Flüssigkeit oder eines Feststoffes kann in oder entgegen der Strömungsrichtung des durch den Reaktor 1 strömenden Prozessgases erfolgen. Bevorzugt wird der mindestens eine Ausgangsstoff (AGS) unter Verwendung eines Trägergases in den Reaktor 1, bevorzugt in den Prozessraum 9 des Reaktors 1 eingebracht. Die Entscheidung, ob der mindestens eine Ausgangsstoff (AGS) in oder entgegen der Strömungsrichtung des Prozessgases in den Reaktor 1 eingebracht wird, hängt maßgeblich von der Form, Masse und Dichte des mindestens einen Ausgangsstoffes bei einer eingestellten mittleren Strömungsgeschwindigkeit des Prozessgases ab.

Die thermische Synthese bzw. thermische Behandlung stellt den eigentlichen verfahrenstechnischen Schritt zur Herstellung bzw. Behandlung von dem mindestens einen Ausgangsstoff zum Partikel dar. Hierbei sind genau kontrollierte und reproduzierbare Prozessbedingungen im Prozessraum 9 (Reaktionsraum) einzustellen.

Der Reaktor 1, insbesondere der Prozessraum 9 des Reaktors 1, weist zudem für einen in den Reaktor 1 eingebrachten Ausgangsstoff, der aufgrund seiner Form, Masse und Dichte bei der eingestellten mittleren Strömungsgeschwindigkeit des durch den Reaktor 1 strömenden Prozessgases nicht durch das Prozessgas transportiert werden kann, einen Auslass 26 auf. Bei der thermischen Behandlung von Ausgangsstoffen, die nicht durch das Prozessgas transportiert werden können, muss der Reaktor 1, bevorzugt der Prozessraum 9 des Reaktors 1, besonders bevorzugt die Behandlungszone des Reaktors 1, senkrecht stehen, so dass der mindestens eine thermisch zu behandelnde Ausgangsstoff schwerkraftbedingt in Richtung des am unteren Ende des Reaktors 1 angeordneten Auslasses 26 absinkt. Am Auslass 26 können die thermisch behandelten Partikel (P) über ein nicht gezeigtes Schleusensystem aus dem Reaktor 1 ausgebracht werden.

Darüber hinaus weist der Reaktor 1 einen Auslass 5 auf. In der in Fig. 5 dargestellten fünften Ausführungsform des erfindungsgemäßen Reaktors 1 weist der Auslass 5 in Strömungsrichtung des durch den Reaktor 1 strömenden Prozessgases ein Einbauteil 7, eine erste Abscheidevorrichtung 4, eine Quenchvorrichtung 27, eine zweite Abscheidevorrichtung 4 und eine Strömungsmaschine 28 auf.

Das Einbauteil 7 ist vorzugsweise in Form einer Einschnürung des beispielsweise als Rohr oder -stutzen ausgebildeten Auslasses 5 oder in Form einer Drossel, bevorzugt einer drucksteifen Drossel, ausgebildet.

Die Einbauteile 3, 7 werden bevorzugt zur Eingrenzung der Druckpulsation auf den Prozessraum 9 des Reaktors 1 verwendet.

Die in Strömungsrichtung des durch den Reaktor 1 strömenden Prozessgases (PG) erste Abscheidevorrichtung 4 ist vorzugsweise als Zyklon oder Filter, insbesondere Heißgasfilter, bevorzugt als Schlauch-, Metall- oder Glasfaserfilter, ausgebildet. Die erste Abscheidevorrichtung 4 wird besonders bevorzugt zur Trockenabscheidung der hergestellten bzw. thermisch behandelten Partikel (P) verwendet.

Die Quenchvorrichtung 27 wird verwendet, um die im Reaktor 1 ablaufende Reaktion zu einem bestimmten Zeitpunkt zu stoppen. Hierfür wird dem durch den Reaktor 1 pulsierend strömenden, heißen Prozessgasstrom über die Quenchvorrichtung 27 ein Kühlgas (KG) zugemischt, bevorzugt Luft, besonders bevorzugt Kalt- oder Druckluft. Andere Gase, wie z. B. Stickstoff (N₂), Argon (Ar), andere Inert- oder Edelgase oder dergleichen sind ebenso als Kühlgas einsetzbar. Das über die Quenchvorrichtung 27 zugemischte Kühlgas kann gegebenenfalls je nach Anforderung vorab gefiltert oder konditioniert werden. Darüber hinaus ist es möglich alternativ zur Luftzumischung eine Wassereindüsung vorzunehmen. Die Quenchvorrichtung 27 kann Einbauten aufweisen oder wird ohne Einbauten im Reaktor 1 verbaut.

In der in Fig. 5 gezeigten fünften Ausführungsform des erfindungsgemäßen Reaktors 1 ist stromab der Quenchvorrichtung 27 eine zweite Abscheidevorrichtung 4 verbaut. Die zweite Abscheidevorrichtung 4 dient vorzugsweise ebenfalls zur Trockenabscheidung und ist bevorzugt als Filter, insbesondere als Heißgasfilter, als Zyklon oder als Wäscher ausgeführt. Über die zweite Abscheidevorrichtung 4 werden die gegebenenfalls über die erste Abscheidevorrichtung 4 nicht aus dem durch den Reaktor 1 strömenden Prozessgases abgetrennten Partikel aus dem Prozessgas abgetrennt.

Vor der Auslassöffnung 6 des Auslasses 5 ist im Reaktor 1 eine weitere Strömungsmaschine 21 angeordnet, vorzugsweise ein Radialventilator, ein Gebläse oder ein Verdichter. Die weitere Strömungsmaschine 21 kann zusätzlich oder alternativ zu der im Einlass 2 angeordneten Strömungsmaschine 21 im Reaktor 1 verbaut werden.

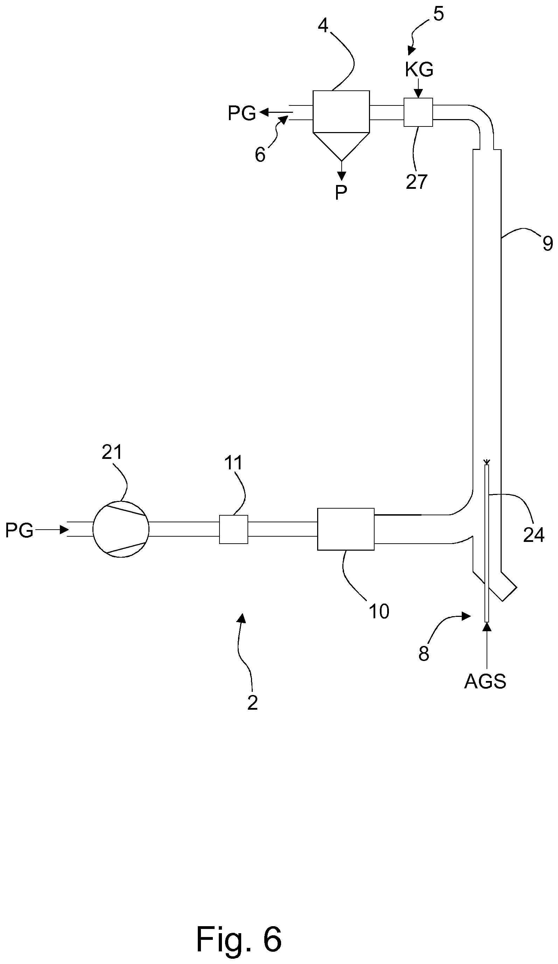

In Fig. 6 wird eine detaillierte schematische Darstellung einer nicht erfindungsgemässen sechsten Ausführungsform des Reaktors 1 zur Herstellung von Partikeln, insbesondere anorganischen oder organischen Nanopartikeln, vorzugsweise von nanokristallinen Metalloxidpartikeln, dargestellt.

Der Reaktor 1 weist einen Einlass 2 umfassend eine Strömungsmaschine 21, eine Pulsationseinrichtung 11 und eine Heizeinrichtung 10. Das durch den Reaktor 1 strömende Prozessgas tritt in den Reaktor 1 über den Einlass 2 ein. Hierbei wird dem durch den Reaktor 1 strömenden Prozessgas mittels der Pulsationseinrichtung 11 eine Druckpulsation aufgeprägt. Die Druckpulsation weist bevorzugt eine Druckamplitude von 1 mbar bis 350 mbar, besonders bevorzugt von 1 mbar bis 200 mbar, ganz besonders bevorzugt von 3 mbar bis 50 mbar, am meisten bevorzugt von 3 mbar bis 25 mbar auf. Die Schwingungsfrequenz des Prozessgases kann unabhängig von der Druckamplitude eingestellt werden. Die Schwingungsfrequenz des durch den Reaktor 1 aufgrund der Pulsationseinrichtung 11 pulsierend strömenden Prozessgases ist ebenfalls einstellbar, bevorzugt im Frequenzbereich von 1 Hz bis 2000 Hz, besonders bevorzugt im Frequenzbereich von 1 Hz bis 500 Hz. Im Anschluss wird der durch den Reaktor 1 strömende, pulsierende Prozessgasstrom durch die Heizeinrichtung 10 auf Behandlungstemperatur erwärmt bzw. erhitzt. Die Behandlungstemperatur zur Herstellung bzw. thermischen Behandlung des mindestens einen Ausgangsstoffes beträgt vorzugsweise zwischen 100 °C und 3000 °C, bevorzugt zwischen 650 °C und 2200 °C, besonders bevorzugt zwischen 700 °C und 1800 °C.

Stromab der Heizeinrichtung 10 ist der Prozessraum 9 des Reaktors 1 ausgebildet. Im Prozessraum 9 des Reaktors 1 wird der mindestens eine Ausgangsstoff in den durch den Reaktor 1 strömenden, pulsierenden Heißgasstrom eingebracht. Zum Einbringen des mindestens einen Ausgangsstoffes (AGS) in den Reaktor 1 ist im Reaktor 1, vorzugsweise im Prozessraum 9 des Reaktors 1, ein Einlass 8 vorgesehen, der bevorzugt als Aufgabevorrichtung 24, besonders bevorzugt als Ein- und/oder Mehrstoffdüse und/oder als Injektor, ausgebildet ist. In der in Fig. 6 gezeigten Ausführungsform wird der mindestens eine Ausgangsstoff (AGS) in Strömungsrichtung des pulsierend strömenden heißen Prozessgases aufgegeben.

Der mindestens eine Ausgangsstoff (AGS) wird in der Behandlungszone des Reaktors 1, bevorzugt im Prozessraum 9 des Reaktors 1, thermisch behandelt, so dass sich die herzustellenden Partikel, vorzugsweise die anorganischen oder organischen Nanopartikel, besonders bevorzugt die nanokristallinen Metalloxidpartikel, ausbilden.

Des Weiteren weist der Reaktor 1 zur Herstellung von Partikeln einen Auslass 5 auf. In der in Fig. 6 dargestellten sechsten Ausführungsform umfasst der Auslass 5 in Strömungsrichtung des pulsierend strömenden, heißen Prozessgases eine Quenchvorrichtung 27 und eine Abscheidevorrichtung 4.

Die Quenchvorrichtung 27 wird verwendet, um die im Reaktor 1 ablaufende Reaktion zu einem bestimmten Zeitpunkt zu stoppen. Hierfür wird dem durch den Reaktor 1 pulsierend strömenden, heißen Prozessgasstrom über die Quenchvorrichtung 27 ein Kühlgas zugemischt, bevorzugt Luft, besonders bevorzugt Kalt- oder Druckluft. Die über die Quenchvorrichtung 27 zugemischte Luft kann gegebenenfalls je nach Anforderung vorab gefiltert oder konditioniert werden. Darüber hinaus ist es möglich alternativ zur Luftzumischung eine Wassereindüsung vorzunehmen. Die im Reaktor 1 angeordnete Quenchvorrichtung 27 kann Einbauten aufweisen oder wird ohne Einbauten im Reaktor 1 verbaut. Andere Gase, wie z. B. Stickstoff (N₂), Argon (Ar), andere Inert- oder Edelgase oder dergleichen sind ebenso als Kühlgas einsetzbar.

Die Abscheidevorrichtung 4, insbesondere ein Filter, bevorzugt ein Heißgasfilter, ganz besonders bevorzugt ein Schlauch-, Metall- oder Glasfaserfilter, ein Zyklon oder ein Wäscher., trennt die thermisch behandelten Partikel aus dem pulsierend durch den Reaktor 1 strömenden, heißen Prozessgasstrom ab. Die aus dem Prozessgasstrom abgeschiedenen Partikel werden aus der Abscheidevorrichtung 4 abgeführt und weiterverarbeitet. Falls notwendig werden die im erfindungsgemäßen Reaktor 1 thermisch behandelten Partikel weiteren Nachbehandlungsschritten, wie bspw. einer Suspendierung, Mahlung oder einer Kalzination unterzogen. Das nicht beladene Prozessgas wird über die Auslassöffnung 6 des Auslasses 5 in die Umgebung abgeführt.

Die Verweilzeit des mindestens einen in den Reaktor 1, insbesondere in den Prozessraum des Reaktors 1, eingebrachten Ausgangsstoffes beträgt in der Behandlungszone des Reaktors 1 zwischen 0,1 s und 25 s.

Bei allen vorgenannten in den Fign. 1 bis 6 gezeigten Reaktoren 1 ist eine Kreislauffahrweise des Prozessgases (PG) möglich. Gegebenenfalls ist auch eine Teilauskreisung des Prozessgases möglich. Im Vergleich zum Brennersystem gemäß dem Stand der Technik sind deutlich geringere Prozesstemperaturen sehr wirtschaftlich möglich, d. h. ohne zusätzliche Luftzuführung.

## Patentansprüche

1. Verfahren zur Herstellung von Partikeln (P) umfassend die Schritte
(a) des Einbringens mindestens eines Ausgangsstoffes (AGS) in einen Reaktor (1),
(b) des Unterwerfens des mindestens einen Ausgangsstoffes (AGS) in einer Behandlungszone eines Prozessraums (9) des Reaktors (1) unter eine thermische Behandlung einer pulsierenden Prozessgasströmung,
(c) des Bildens von Partikeln (P),
(d) des Ausbringens der in Schritt (b) und (c) erhaltenen Partikel (P) aus dem Reaktor (1), und
(e) wobei die Temperierung der Prozessgasströmung von der Erzeugung und Aufrechterhaltung der Druckpulsation der Prozessgasströmung entkoppelt ist,
wobei der mindestens eine Ausgangsstoff (AGS) in der Behandlungszone bei einer Behandlungstemperatur von 100 °C bis 3000 °C und einer Verweilzeit im Bereich von 0,1 s bis 25 s thermisch behandelt wird, **dadurch gekennzeichnet, dass** durch mindestens ein vor und/oder nach dem Prozessraum (9) angeordnetes, als Strömungseinschnürung oder als Drossel ausgebildetes Einbauteil (3, 7) eine Eingrenzung der Druckpulsation auf den Prozessraum (9) erreicht wird.

2. Verfahren nach Anspruch 1, **dadurch gekennzeichnet, dass** das Prozessgas (PG) ein Inertgas, ein Explosionsschutzgas, ein Gasgemisch, insbesondere Luft, oder ein für den reduzierenden Betrieb geeignetes Gas ist.

3. Verfahren nach Anspruch 1 oder 2, **dadurch gekennzeichnet, dass** der mindestens eine Ausgangsstoff (AGS) in oder entgegen der Strömungsrichtung des pulsierend strömenden Prozessgases (PG) in den Prozessraum (9) des Reaktors (1), eingebracht wird.

4. Verfahren nach einem der vorhergehenden Ansprüche, **dadurch gekennzeichnet, dass** das pulsierend durch den Reaktor (1) strömende Prozessgas (PG) indirekt beheizt wird und/oder das pulsierend durch den Reaktor (1) strömende Prozessgas (PG) stromauf der Pulsationseinrichtung auf Behandlungstemperatur erwärmt wird.

5. Verfahren nach einem der vorhergehenden Ansprüche, **dadurch gekennzeichnet, dass** der mindestens eine Ausgangsstoff (AGS) in der Behandlungszone bei einer Behandlungstemperatur von 650 °C bis 2200 °C mit einer Verweilzeit von 0,1 s bis 25 s thermisch behandelt wird oder, dass der mindestens eine Ausgangsstoff (AGS) in der Behandlungszone bei einer Behandlungstemperatur von 100 °C bis 3000 °C mit einer Verweilzeit von 2,1 s bis 25 s thermisch behandelt wird.

6. Verfahren nach einem der vorhergehenden Ansprüche, **dadurch gekennzeichnet, dass** das Prozessgas (PG) mit einer Frequenz von 1 Hz bis 2000 Hz, bevorzugt mit einer Frequenz von 1 Hz bis 500 Hz pulsiert und/oder dem durch den Reaktor (1) strömenden Prozessgas eine Druckpulsation mit einer Druckamplitude von 1 mbar bis 350 mbar aufgeprägt wird, bevorzugt von 1 mbar bis 200 mbar, besonders bevorzugt von 3 mbar bis 50 mbar, am meisten bevorzugt von 3 mbar bis 25 mbar und/oder das Verfahren bei einem Unterdruck gegenüber dem Umgebungsdruck abläuft.

7. Verfahren nach einem der vorhergehenden Ansprüche, **dadurch gekennzeichnet, dass** der für das Verfahren verwendete Reaktor (1) ein Reaktor (1) gemäß einem der Ansprüche 8 bis 15 ist.

8. Reaktor (1) zur Herstellung von Partikeln (P) aufweisend
(a) einen eine Behandlungszone aufweisenden Prozessraum (9) sowie einen Einlass (8) zum Einbringen mindestens eines Ausgangsstoffes (AGS) in den Reaktor (1),
(b) einen Einlass (2) für ein durch den Reaktor (1) strömendes Prozessgas (PG),
(c) eine Heizeinrichtung (10) zur Erwärmung des durch den Reaktor (1) strömenden Prozessgases (PG) auf Behandlungstemperatur,
(d) eine Pulsationseinrichtung (11) zur Druckmodulation des durch den Reaktor (1) strömenden Prozessgases (PG), und
(e) eine Abscheidevorrichtung (4) zum Ausbringen der Partikel (P) aus dem Reaktor (1),
(f) die Heizeinrichtung (10) und die Pulsationseinrichtung (11) räumlich voneinander getrennt sind
**dadurch gekennzeichnet, dass** der Reaktor (1) mindestens ein als Strömungseinschnürung oder Drossel ausgebildetes Einbauteil (3, 7) vor und/oder nach dem Prozessraum (9) zur Eingrenzung der Druckpulsation auf den Prozessraum (9) aufweist.

9. Reaktor (1) nach Anspruch 8, **dadurch gekennzeichnet, dass** der Reaktor (1) als Synthesereaktor ausgebildet ist.

10. Reaktor (1) nach Anspruch 8 oder 9, **dadurch gekennzeichnet, dass** die Heizeinrichtung (10) als Vorrichtung zur indirekten Beheizung des durch den Reaktor (1) strömenden Prozessgases (PG) ausgebildet ist, zweckmäßigerweise als konvektiver Heizer, als Elektrogaserhitzer, als Plasmaheizung, als Mikrowellenheizung, als Induktionsheizung oder als Strahlungsheizer und/oder die Heizeinrichtung (10) stromauf der Pulsationseinrichtung (11) angeordnet ist.

11. Reaktor (1) nach einem der vorhergehenden Ansprüche 8 bis 10, **dadurch gekennzeichnet, dass** der Reaktor (1), insbesondere der Prozessraum (9) des Reaktors (1), einen insbesondere als Doppelklappe, als Zellenradschleuse, als Taktschleuse oder als Injektor ausgebildeten Feststoffauslass (26) aufweist.

12. Reaktor (1) nach einem der vorhergehenden Ansprüche 8 bis 11, **dadurch gekennzeichnet, dass** der Reaktor (1) eine weitere Heizeinrichtung (23) zum Beheizen des Prozessraums (9) des Reaktors (1) aufweist, die insbesondere als Begleitheizung, als Plasmaheizung, als Mikrowellenheizung, als Induktionsheizung, als Strahlungsheizer oder als Brenner ausgebildet ist.

13. Reaktor (1) nach einem der vorhergehenden Ansprüche 8 bis 12, **dadurch gekennzeichnet, dass** die Pulsationseinrichtung (11) als Kompressionsmodul, insbesondere als Kolben, als Drehschieber, als drehbare Klappe oder als modifizierte Dosierschleuse ausgebildet ist.

14. Reaktor (1) nach einem der vorhergehenden Ansprüche 8 bis 13, **dadurch gekennzeichnet, dass** der Einlass (8) zum Einbringen des mindestens einen Ausgangsstoffes (AGS) mindestens eine Aufgabevorrichtung (24, 25) ist, wobei die Aufgabevorrichtung (24, 25) zweckmäßigerweise als Ein- und/oder Mehrstoffdüse, Zuführungsrohr und/oder als Pulverinjektor ausgebildet ist.

15. Reaktor (1) nach einem der vorhergehenden Ansprüche 8 bis 14, **dadurch gekennzeichnet, dass** der Reaktor (1) eine Quenchvorrichtung (27) aufweist und/oder die Abscheidevorrichtung (4) als Zyklon, als Filter, insbesondere ein Heißgasfilter, oder als Wäscher ausgebildet ist.

## Claims

1. A method for producing particles (P) comprising the steps:
(a) introducing at least one starting material (AGS) into a reactor (1),
(b) subjecting the at least one starting material (AGS) in a treatment zone of the process space (9) of the reactor (1) to a thermal treatment of a pulsating process gas stream,
(c) forming particles (P),
(d) discharging the particles (P) obtained in steps (b) and (c) from the reactor (1), and
(e) wherein the temperature control of the process gas stream is decoupled from the generation and maintenance of the pressure pulsation of the process gas stream,
wherein the at least one starting material (AGS) is thermally treated in the treatment zone at a treatment temperature of 100 °C to 3000 °C and a residence time in the range of 0.1 s to 25 s, **characterized in that** a confinement of the pressure pulsation to the process space (9) is achieved by at least one installation part (3, 7) arranged before and/or after the process space (9), configured as a flow constriction or as a throttle.

2. The method according to claim 1, **characterized in that** the process gas (PG) is an inert gas, an explosion protection gas, a gas mixture, in particular air, or a gas suitable for reducing operation.

3. The method according to claim 1 or 2, **characterized in that** the at least one starting material (AGS) is introduced into the process space (9) of the reactor (1) in or counter to the flow direction of the pulsatingly flowing process gas (PG).

4. The method according to any of the preceding claims, **characterized in that** the pulsatingly flowing process gas (PG) through the reactor (1) is indirectly heated and/or the pulsatingly flowing process gas (PG) through the reactor (1) is heated to the treatment temperature upstream of the pulsation device.

5. The method according to any of the preceding claims, **characterized in that** the at least one starting material (AGS) is thermally treated in the treatment zone at a treatment temperature of 650 °C to 2200 °C with a residence time of 0.1 s to 25 s, or that the at least one starting material (AGS) is thermally treated in the treatment zone at a treatment temperature of 100 °C to 3000 °C with a residence time of 2.1 s to 25 s.

6. The method according to any of the preceding claims, **characterized in that** the process gas (PG) pulsates at a frequency of 1 Hz to 2000 Hz, preferably at a frequency of 1 Hz to 500 Hz, and/or a pressure pulsation with a pressure amplitude of 1 mbar to 350 mbar is impressed upon the process gas flowing through the reactor (1), preferably from 1 mbar to 200 mbar, particularly preferably from 3 mbar to 50 mbar, most preferably from 3 mbar to 25 mbar, and/or the method is carried out at a negative pressure relative to the ambient pressure.

7. The method according to any of the preceding claims, **characterized in that** the reactor (1) used for the method is a reactor (1) according to any of claims 8 to 13.

8. A reactor (1) for producing particles (P) comprising:
(a) a process space (9) comprising a treatment zone as well as an inlet (8) for introducing at least one starting material (AGS) into the reactor (1),
(b) an inlet (2) for a process gas (PG) flowing through the reactor (1),
(c) a heating device (10) for heating the process gas (PG) flowing through the reactor (1) to a treatment temperature,
(d) a pulsation device (11) for pressure modulation of the process gas (PG) flowing through the reactor (1), and
(e) a separation device (4) for discharging the particles (P) from the reactor (1),
(f) the heating device (10) and the pulsation device (11) are spatially separated from each other,
**characterized in that** the reactor (1) comprises at least one installation part (3, 7) configured as a flow constriction or throttle, arranged before and/or after the process space (9), for confining the pressure pulsation to the process space (9).

9. The reactor (1) according to claim 8, **characterized in that** the reactor (1) is configured as a synthesis reactor.

10. The reactor (1) according to claim 8 or 9, **characterized in that** the heating device (10) is configured as a device for indirect heating of the process gas (PG) flowing through the reactor (1), suitably as a convective heater, as an electric gas heater, as a plasma heating, as a microwave heating, as an induction heating, or as a radiation heater, and/or the heating device (10) is arranged upstream of the pulsation device (11).

11. The reactor (1) according to any of claims 8 to 10, **characterized in that** the reactor (1), in particular the process space (9) of the reactor (1), comprises a solids outlet (26) configured in particular as a double flap, a rotary valve, a clocked valve, or as an injector.

12. The reactor (1) according to any of claims 8 to 11, **characterized in that** the reactor (1) comprises a further heating device (23) for heating the process space (9) of the reactor (1), which is configured in particular as a trace heating, as a plasma heating, as a microwave heating, as an induction heating, as a radiation heater, or as a burner.

13. The reactor (1) according to any of claims 8 to 12, **characterized in that** the pulsation device (11) is configured as a compression module, in particular as a piston, as a rotary slide valve, as a rotatable flap, or as a modified dosing screw.

14. The reactor (1) according to any of the preceding claims 8 to 13, **characterized in that** the inlet (8) for introducing the at least one starting material (AGS) is at least one feed device (24, 25), wherein the feed device (24, 25) is expediently configured as a single-fluid and/or multi-fluid nozzle, a feed pipe and/or as a powder injector.

15. The reactor (1) according to any of the preceding claims 8 to 14, **characterized in that** the reactor (1) comprises a quench device (27) and/or the separation device (4) is configured as a cyclone, as a filter, in particular a hot gas filter, or as a scrubber.

## Revendications

1. Procédé de production de particules (P) comprenant les étapes
(a) d'introduction d'au moins une matière de départ (AGS) dans un réacteur (1),
(b) de soumission de l'au moins une matière de départ (AGS) dans une zone de traitement d'une chambre de processus (9) du réacteur (1) à un traitement thermique d'un courant de gaz de processus pulsatile,
(c) de formation de particules (P),
(d) d'évacuation des particules (P) obtenues à l'étape (b) et (c) du réacteur (1), et
(e) dans lequel la régulation de température du courant de gaz de processus est découplée de la génération et du maintien de la pulsation de pression du courant de gaz de processus,
dans lequel l'au moins une matière première (AGS) est traitée thermiquement dans la zone de traitement à une température de traitement de 100 °C à 3000 °C et un temps de séjour dans la plage de 0,1 s à 25 s, **caractérisé en ce qu'**au moins une pièce d'installation (3, 7) réalisée en tant en tant que restriction d'écoulement ou en tant qu'étranglement, disposée en amont et/ou en aval de la chambre de processus (9),
permet d'atteindre une limitation de la pulsation de pression sur la chambre de processus (9).

2. Procédé selon la revendication 1, **caractérisé en ce que** le gaz de processus (PG) est un gaz inerte, un gaz antidéflagrant, un mélange de gaz, en particulier de l'air, ou un gaz adapté au fonctionnement réducteur.

3. Procédé selon la revendication 1 ou 2, **caractérisé en ce que** l'au moins une matière de départ (AGS) est introduite dans la chambre de processus (9) du réacteur (1) dans le sens d'écoulement ou dans le sens opposé au sens d'écoulement du gaz de processus (PG) s'écoulant par pulsations.

4. Procédé selon l'une quelconque des revendications précédentes, **caractérisé en ce que** le gaz de processus (PG) s'écoulant par pulsations à travers le réacteur (1) est chauffé indirectement et/ou le gaz de processus (PG) s'écoulant par pulsations à travers le réacteur (1) est réchauffé à la température de traitement en amont de l'appareil de pulsation.

5. Procédé selon l'une quelconque des revendications précédentes, **caractérisé en ce que** l'au moins une matière de départ (AGS) dans la zone de traitement est traitée thermiquement à une température de traitement de 650 °C à 2200 °C avec un temps de séjour de 0,1 s à 25 s ou que l'au moins une matière de départ (AGS) dans la zone de traitement est traitée thermiquement à une température de traitement de 100 °C à 3000 °C avec un temps de séjour de 2,1 s à 25 s.

6. Procédé selon l'une quelconque des revendications précédentes, **caractérisé en ce que** le gaz de processus (PG) pulse à une fréquence de 1 Hz à 2000 Hz, de préférence à une fréquence de 1 Hz à 500 Hz et/ou une pulsation de pression d'une amplitude de pression de 1 mbar à 350 mbar, de préférence de 1 mbar à 200 mbar, de manière particulièrement préférée de 3 mbar à 50 mbar, idéalement de 3 mbar à 25 mbar est appliquée au gaz de processus s'écoulant à travers le réacteur (1), et/ou le procédé se déroule avec une pression négative par rapport à la pression ambiante.

7. Procédé selon l'une quelconque des revendications précédentes, **caractérisé en ce que** le réacteur (1) utilisé pour le procédé est un réacteur (1) selon l'une quelconque des revendications 8 à 15.

8. Réacteur (1) de fabrication de particules (P) présentant
(a) une chambre de processus (9) présentant une zone de traitement ainsi qu'une entrée (8) pour l'introduction d'au moins une matière de départ (AGS) dans le réacteur (1),
(b) une entrée (2) pour un gaz de processus (PG) s'écoulant à travers le réacteur (1),
(c) un appareil de chauffage (10) pour réchauffer le gaz de processus (PG) s'écoulant à travers le réacteur (1) à la température de traitement,
(d) un appareil de pulsation (11) pour moduler la pression du gaz de processus (PG) s'écoulant à travers le réacteur (1), et
(e) un dispositif de séparation (4) pour évacuer les particules (P) du réacteur (1),
(f) l'appareil de chauffage (10) et l'appareil de pulsation (11) sont séparés l'un de l'autre dans l'espace, **caractérisé en ce que** le réacteur (1) présente au moins une pièce d'installation (3, 7) réalisée en tant que restriction d'écoulement ou étranglement en amont et/ou en aval de la chambre de processus (9) pour limiter la pulsation de pression sur la chambre de processus (9).

9. Réacteur (1) selon la revendication 8, **caractérisé en ce que** le réacteur (1) est réalisé en tant que réacteur de synthèse.

10. Réacteur (1) selon la revendication 8 ou 9, **caractérisé en ce que** l'appareil de chauffage (10) est réalisé en tant que dispositif pour le chauffage indirect du gaz de processus (PG) s'écoulant à travers le réacteur (1), avantageusement en tant que chauffage par convection, en tant que chauffage électrique à gaz, en tant que chauffage plasma, en tant que chauffage à micro-ondes, en tant que chauffage par induction ou en tant que chauffage par rayonnement et/ou l'appareil de chauffage (10) est disposé en amont de l'appareil de pulsation (11).

11. Réacteur (1) selon l'une quelconque des revendications précédentes 8 à 10, **caractérisé en ce que** le réacteur (1), en particulier la chambre de processus (9) du réacteur (1), présente une sortie de solides (26) réalisée en particulier en tant que clapet double, en tant qu'écluse à roue cellulaire, en tant qu'écluse cadencée ou en tant qu'injecteur.

12. Réacteur (1) selon l'une quelconque des revendications précédentes 8 à 11, **caractérisé en ce que** le réacteur (1) présente un autre appareil de chauffage (23) pour chauffer la chambre de processus (9) du réacteur (1), qui est réalisé en particulier en tant que chauffage d'accompagnement, en tant que chauffage plasma, en tant que chauffage à micro-ondes, en tant que chauffage par induction, en tant que chauffage par rayonnement ou en tant que brûleur.

13. Réacteur (1) selon l'une quelconque des revendications précédentes 8 à 12, **caractérisé en ce que** l'appareil de pulsation (11) est réalisé en tant que module de compression, en particulier en tant que piston, en tant que tiroir rotatif, en tant que clapet rotatif ou en tant qu'écluse de dosage modifiée.

14. Réacteur (1) selon l'une quelconque des revendications précédentes 8 à 13, **caractérisé en ce que** l'entrée (8) pour l'introduction de l'au moins une matière de départ (AGS) est au moins un dispositif d'alimentation (24, 25), dans lequel le dispositif d'alimentation (24, 25) est réalisé avantageusement en tant que buse à matière unique et/ou multimatière, tube d'amenée et/ou en tant qu'injecteur de poudre.

15. Réacteur (1) selon l'une quelconque des revendications précédentes 8 à 14, **caractérisé en ce que** le réacteur (1) présente un dispositif de trempe (27) et/ou le dispositif de séparation (4) est réalisé en tant que cyclone, en tant que filtre, en particulier un filtre à gaz chaud, ou en tant que laveur.
